(19) Europäisches Patentamt
European Patent Office
Office européen des brevets

(11) **EP 3 182 065 A1**

(12) **EUROPÄISCHE PATENTANMELDUNG**

(43) Veröffentlichungstag:
**21.06.2017 Patentblatt 2017/25**

(51) Int Cl.:
**G01C 15/00** *(2006.01)*  **G01S 17/42** *(2006.01)*

(21) Anmeldenummer: **15199932.3**

(22) Anmeldetag: **14.12.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Leica Geosystems AG**
**9435 Heerbrugg (CH)**

(72) Erfinder:
• **METZLER, Bernhard**
**A-6850 Dornbirn (AT)**

• **AEBISCHER, Beat**
**CH-9435 Heerbrugg (CH)**
• **SIERCKS, Knut**
**CH-9402 Mörschwil (CH)**
• **WILTSCHE, Siegfried**
**A-6922 Wolfurt (AT)**

(74) Vertreter: **Gyaja, Christoph Benjamin**
**Kaminski Harmann**
**Patentanwälte AG**
**Landstrasse 124**
**9490 Vaduz (LI)**

(54) **HANDHALTBARES ENTFERNUNGSMESSGERÄT UND VERFAHREN ZUM ERFASSEN RELATIVER POSITIONEN**

(57)     Die Erfindung betrifft ein Verfahren zum Erfassen einer relativen Position mindestens eines ersten Raumpunktes (10) mittels eines handhaltbaren Entfernungsmessgerätes (1), mit einem Positionieren eines bekannten Referenzobjektes (31), das bekannte, optisch erfassbare Merkmale aufweist, die in einem für einen Rückwärtseinschnitt gestalteten Muster angeordnet sind, mindestens einem ersten Messvorgang, aufweisend ein Messen einer ersten Entfernung zu dem ersten Raumpunkt (10), und ein Aufnehmen eines ersten Referenzbildes zeitlich verknüpft, insbesondere gleichzeitig, mit dem Messen der ersten Entfernung, wobei das Referenzobjekt in dem ersten Referenzbild abgebildet ist, und einem Ermitteln der Position und Orientierung des Entfernungsmessgerätes (1) relativ zum Referenzobjekt (31), aufweisend ein Erkennen des Referenzobjektes, ein Abrufen gespeicherter Informationen über die bekannten Merkmale des erkannten Referenzobjektes, und ein Erkennen von Positionen bekannter Merkmale des Referenzobjektes in dem ersten Referenzbild. Die Erfindung betrifft ausserdem ein handhaltbares Entfernungsmessgerät (1) zum Ausführen des Verfahrens mit einer Entfernungsmesseinheit, insbesondere einem Laserentfernungsmesser, zum Messen von Entfernungen zu Raumpunkten entlang einer Emissionsrichtung (9) in einem Raum, einer Auswertekomponente, die ausgestaltet ist zur Ableitung und Bereitstellung der gemessenen Entfernungen, und einer Lagebestimmungseinheit zum Ermitteln einer relativen räumlichen Lage des Entfernungsmessgerätes (1).

Fig. 3

**Beschreibung**

Die vorliegende Erfindung betrifft ein Verfahren zum Erfassen relativer Positionen sowie ein handhaltbares Entfernungsmessgerät zum Ausführen eines solchen Verfahrens. Insbesondere betrifft die Erfindung ein Verfahren zum gegenseitigen Referenzieren mehrerer mittels eines handhaltbaren Entfernungsmessgerätes durchgeführter Entfernungsmessungen. Ein erfindungsgemäßes handhaltbares Entfernungsmessgerät beinhaltet zu diesem Zweck eine optische Lagebestimmungseinheit zur Erfassen einer Lage des Entfernungsmessgerätes relativ zu einem Referenzobjekt. Insbesondere definiert dieses Referenzobjekt den Ursprung eines lokalen Referenzkoordinatensystems und ermöglicht die Bestimmung von Raumwinkeln in Relation zu dem Referenzkoordinatensystem, wodurch zusammen mit den Entfernungsmessungen relative dreidimensionale Koordinaten von Raumpunkten bestimmt und einem Benutzer angezeigt werden können.

In vielen Anwendungen werden Verfahren und Systeme zur Entfernungsmessung verwendet. Beispiele hierfür sind ausgesprochen präzise Vermessungen in geodätischen Applikationen, aber auch Messaufgaben im Bereich der Bauinstallation oder für industrielle Prozesssteuerungen. Für diese Aufgaben werden stationäre, bewegbare oder auch handhaltbare Entfernungsmessgeräte eingesetzt, welche eine optische Entfernungsmessung zu einem ausgewählten Messpunkt ausführen. Zumeist wird hierbei ein Laserstrahl emittiert und nach Reflektion am Ziel wieder empfangen und ausgewertet. Zur Bestimmung der Entfernung stehen dabei verschiedene Messprinzipien zur Verfügung, wie z. B. Phasen- oder Laufzeitmessung.

Insbesondere im Bereich der Bauinstallation oder Bauabnahme werden tragbare und in der Hand zu haltende Geräte verwendet, welche bezüglich einer zu vermessenden Struktur angelegt werden und dann eine Entfernungsmessung zu einer Oberfläche durchführen. Für solche Anwendungen geeignete und typische handhaltbare Entfernungsmessgeräte werden beispielsweise in der EP 0 738 899 und der EP 0 701 702 beschrieben. Da für die meisten Anwendungen ein auf der anzumessenden Oberfläche sichtbarer Messpunkt vorteilhaft ist, werden zumeist rote Laser als Strahlungsquellen für die Entfernungsmessung verwendet. Mit Entfernungsmessern des Stands der Technik sind so bei grosser Handhabungsfreundlichkeit Genauigkeiten bis in den Millimeterbereich erzielbar. Mit konventionellen handhaltbaren Entfernungsmessgeräten können Messungen von einem Punkt zu einem anderen Punkt durchgeführt werden, zu dem eine Sichtverbindung besteht. Wenn das Ziel verdeckt ist, können bei vielen Geräten mittels eines Neigungssensors auch Horizontalmasse ermittelt werden.

Eine Möglichkeit zur Bestimmung einer Entfernung zwischen zwei Punkten, die auch anwendbar ist, wenn zwischen den Punkten keine Sichtverbindung besteht, ist die Berechnung mittels Trigonometrie. Dies ist bereits aus bodengestützten Vermessungsgeräten, wie Theodoliten oder Totalstationen, hinlänglich bekannt. Zur trigonometrischen Ermittlung einer Entfernung a zwischen zwei Raumpunkten B und C genügt es, die Entfernung zu diesen zwei Punkten von einem dritten Punkt A zu kennen, und den Winkel α an Punkt A zwischen den Seiten b und c in Richtung der Punkte B und C. Dann kann mittels des Kosinussatzes die Länge von a errechnet werden:

$$a = \sqrt{b^2 + c^2 - 2 \cdot b \cdot c \cdot \cos \alpha}$$

Mit einem herkömmlichen handhaltbaren Entfernungsmessgerät des Standes der Technik ist es zwar möglich, die Distanzen b und c zu den Raumpunkten B und C exakt zu messen, es fehlt aber meist an einer Funktion zur genauen und zuverlässigen Bestimmung des Winkels α. Heute verfügbare Beschleunigungssensoren können für Zwecke der Entfernungsberechnung keinen ausreichend verlässlichen Wert für α liefern, und Kompasse sind insbesondere in Innenräumen von Gebäuden störungsanfällig; allenfalls Winkel in der Vertikalen können mittels Neigungssensoren mit ausreichender Genauigkeit und Verlässlichkeit ermittelt werden.

Im Stand der Technik sind verschiedene Lösungen mit handhaltbaren Entfernungsmessgeräten mit Laserentfernungsmessern beschrieben, mittels derer zwei Punkte gleichzeitig oder sequentiell angezielt werden können, wobei ein Winkel zwischen den Emissionsrichtungen der beiden Laser bestimmt werden kann.

Die EP 2 698 602 A1 offenbart ein solches Entfernungsmessgerät mit einer ausklappbaren Referenzierungseinheit, die mit einer Oberfläche in Kontakt gebracht wird, wobei mittels Winkelencodern ein Raumwinkel zwischen einer ersten und einer zweiten Ausrichtung des Gerätes relativ zu der Oberfläche bestimmt werden kann. Dieser Ansatz ist zum einen konstruktiv aufwendig und erfordert zum anderen das Vorhandensein einer geeigneten Oberfläche.

Das Dokument EP 1 664 674 B1 betrifft ein Verfahren und ein System zur Bestimmung der Aktualposition eines handhaltbaren Messgerätes im Raum. Dazu weist das Messgerät zusätzlich eine aktive Scanfunktionalität auf zum Abtasten des Raums mittels eines Laserstrahls und zum Erfassen einer Mehrzahl von im Raum verteilten Reflektoren. Auch diese Lösung ist konstruktiv aufwendig. Ausserdem erfordert sie ein relativ zeitaufwendiges Verteilen und Anbringen einer Vielzahl von Reflektoren im Raum und deren Wiedereinsammeln nach Beendigung der Messungen.

Kamerabasierte optische Verfahren sind konstruktiv weniger aufwendig. Solche aus dem Stand der Technik bekannte Verfahren verwenden entweder Image-Stitching oder SLAM (simultaneous localization and mapping) zum Ermitteln der Lageveränderung. So offenbart die Anmeldung EP 2 669 707 A1 offenbart ein handhaltbares Entfernungsmessgerät zur Durchführung eines Verfahrens zur indirekten Bestimmung von Distanzen mittels zweier direkt gemessener Distanzen und eines Winkels, wobei der Winkel aus einem Panoramabild ermittelt wird, das mittels Image-Stitching aus von einer Kamera des Entfernungsmessgerätes in Richtung der Entfernungsmessung aufgenommenen Bilder erzeugt wurde. Bei dem in der WO 2015/073548 A2 beschriebenen Verfahren wird hingegen in einem ersten Bild ein Objekt bekannter Grösse aufgenommen, um einen Massstab für das aufgenommene Bild zu erhalten. Mittels SLAM wird dann eine Veränderung der Pose des Gerätes ermittelt. Zum einen stellen diese Verfahren aber für Image-Stitching oder SLAM gewisse Anforderungen an die aufgenommene Oberfläche, die ausreichend optisch eindeutig erfassbare Merkmale aufweisen muss. Insbesondere bei Messungen auf unstrukturierte (z. B. einheitlich weisse) Wände können diese Verfahren daher nicht sinnvoll angewendet werden. Zum anderen entsteht nachteilig auch ein erheblicher Rechenaufwand.

Es ist daher eine Aufgabe der vorliegenden Erfindung, ein verbessertes handhaltbares Entfernungsmessgerät und ein verbessertes Entfernungsmessverfahren bereitzustellen, die eine Bestimmung relativer dreidimensionaler Koordinaten von Raumpunkten erlauben.

Es ist insbesondere eine Aufgabe der vorliegenden Erfindung, ein solches Entfernungsmessgerät und Verfahren bereitzustellen, die eine Bestimmung relativer dreidimensionaler Koordinaten von mindestens zwei Raumpunkten innerhalb eines gemeinsamen Referenzkoordinatensystems erlauben.

Eine weitere Aufgabe der Erfindung ist es, ein solches Entfernungsmessgerät mit einem geringeren konstruktiven Aufwand, und ein solches Verfahren mit einem geringeren Rechenaufwand bereitzustellen.

Es ist ausserdem eine Aufgabe der Erfindung ein solches Entfernungsmessgerät und -verfahren bereitzustellen, dass die Koordinatenbestimmung unabhängig von der Beschaffenheit der zu vermessenden Oberfläche ermöglicht.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Ein erfindungsgemässes handhaltbares Entfernungsmessgerät enthält ein Distanzmessmodul zur Messung der Entfernung zu auf Oberflächen gelegenen Raumpunkten. Das Distanzmessmodul ist bevorzugt ein Laserdistanzmesser, der einen, insbesondere sichtbaren, Laserstrahl in Richtung eines zu vermessenden Punktes aussendet. Dazu weist das Distanzmessmodul eine, beispielsweise in das Gehäuse des Entfernungsmessgerätes eingelassene, Optik auf. Zum optischen Messen der Distanz zu einer Oberfläche werden von der Vorrichtung über die Optik modulierte optische Sendestrahlen in Form eines Strahlenbündels gegen die Oberfläche ausgesendet. Ein Teil der von der Oberfläche reflektierten Strahlen der Sendestrahlen wird von der Optik wieder eingesammelt und für ein Bestimmen von Distanzen elektronisch ausgewertet.

Ein solches erfindungsgemässes handhaltbares Entfernungsmessgerät enthält ausserdem bevorzugt einen Neigungssensor zur Erfassung mindestens einer Längsneigung des Gerätes. Die Bestimmung der Lage des handhaltbaren Entfernungsmessgeräts im Raum kann in Bezug auf das Referenzkoordinatensystem mittels Neigungssensor vollautomatisch ermittelt werden.

Durch die Integration zusätzlicher Komponenten zum Erfassen der relativen räumlichen Lage ist das erfindungsgemässe Entfernungsmessgerät in der Lage, ausser Distanzen auch horizontale und vertikale Raumwinkel, eine Querneigung des Laserdistanzmessers bzw. der Horizontalachse des Entfernungsmessgerätes, eine Längsneigung des Laserdistanzmessers sowie eine Längsneigung der Horizontalachse zu messen. Mittels dieser gemessenen Werte können von einer Auswerteeinheit korrigierte dreidimensionale Koordinaten ermittelt werden, die unter anderem zur Berechnung von Horizontal- und Schrägdistanzen zwischen Raumpunkten genutzt werden können. Diese zusätzlichen, zur Lagebestimmung geeigneten Komponenten der Lagebestimmungseinheit umfassen erfindungsgemäss eine Bildaufnahmeeinheit zur Aufnahme von Referenzbildern eines bekannten Referenzobjekts, insbesondere gleichzeitig mit der Entfernungsmessung. Optional können zusätzlich ein Zwei-Achsen-Neigungssensor auf der Horizontalachse, ein Kompass und/oder ein Beschleunigungssensor enthalten sein. Eine erste Ausrichtung des Systems kann optional anhand eines Kompasses oder eines GPS-Sensors erfolgen.

Ein erster Aspekt der vorliegenden Erfindung betrifft ein Verfahren zum Erfassen einer relativen Position mindestens eines ersten Raumpunktes mittels eines handhaltbaren Entfernungsmessgerätes. Erfindungsgemäss umfasst das Verfahren ein Positionieren eines bekannten Referenzobjektes, das bekannte, optisch erfassbare Merkmale aufweist, die in einem für einen Rückwärtseinschnitt gestalteten Muster angeordnet sind, sowie mindestens einen ersten Messvorgang, aufweisend ein Messen einer ersten Entfernung zu dem ersten Raumpunkt, und ein Aufnehmen eines ersten Referenzbildes zeitlich verknüpft, insbesondere gleichzeitig, mit dem Messen der ersten Entfernung, wobei das Referenzobjekt in dem ersten Referenzbild ganz oder teilweise abgebildet ist. Ausserdem weist das Verfahren ein Ermitteln der Position und Orientierung des Entfernungsmessgerätes relativ zum Referenzobjekt auf, mit einem Erkennen des Referenzobjektes, einem Abrufen gespeicherter Informationen über die bekannten Merkmale des erkannten Referenzobjektes, und einem Erkennen von Positionen bekannter Merkmale des Referenzobjektes in dem ersten Referenzbild.

Gemäss einer besonderen Ausführungsform weist das erfindungsgemässe Verfahren mindestens einen ersten und einen zweiten Messvorgang auf, wobei das Ermitteln der Position und Orientierung des Entfernungsmessgerätes relativ zum Referenzobjekt ein Ermitteln einer Lageveränderung des Entfernungsmessgerätes zwischen dem ersten Messvorgang und dem zweiten Messvorgang umfasst. Der zweite Messvorgang weist ein Messen einer zweiten Entfernung zu dem zweiten Raumpunkt und ein Aufnehmen eines zweiten Referenzbildes zeitlich verknüpft, insbesondere gleichzeitig, mit dem Messen der zweiten Entfernung auf, wobei das Referenzobjekt in dem zweiten Referenzbild abgebildet ist. Das Ermitteln der Lageveränderung weist dabei ein Erkennen des Referenzobjektes, ein Abrufen gespeicherter Informationen über die bekannten Merkmale des erkannten Referenzobjektes, und ein Erkennen von Positionen bekannter Merkmale des Referenzobjektes in dem ersten Referenzbild und in dem zweiten Referenzbild auf.

In einer Ausführungsform dieses Verfahrens werden das erste und das zweite Referenzbild mit einem Bildsensor, insbesondere einer Digitalkamera, des Entfernungsmessgerätes aufgenommen, und das Ermitteln der Lageveränderung beinhaltet ein Erfassen einer ersten räumlichen Lage und einer zweiten räumlichen Lage des Entfernungsmessgerätes, insbesondere in einem lokalen dreidimensionalen Koordinatensystem.

In einer speziellen Ausführungsform werden in dem ersten und dem zweiten Referenzbild die bekannten Merkmale auf einer Bildebene des Bildsensors abgebildet, das Erfassen der ersten räumlichen Lage erfolgt basierend auf den Positionen der bekannten Merkmale des ersten Referenzbildes auf der Bildebene, und das Erfassen der zweiten räumlichen Lage erfolgt basierend auf den Positionen der bekannten Merkmale des zweiten Referenzbildes auf der Bildebene.

In einer Ausführungsform des erfindungsgemässen Verfahrens weist der erste Messvorgang ein Ausrichten des Entfernungsmessgerätes auf einen ersten Raumpunkt in einer ersten Emissionsrichtung auf, und das Messen der ersten Entfernung zu dem ersten Raumpunkt erfolgt in der ersten Emissionsrichtung. Insbesondere weist dabei ein zweiter Messvorgang ein Ausrichten des Entfernungsmessgerätes auf einen zweiten Raumpunkt auf, und ein Messen einer zweiten Entfernung zu dem zweiten Raumpunkt erfolgt in der zweiten Emissionsrichtung.

In einer weiteren Ausführungsform des erfindungsgemässen Verfahrens weisen die bekannten Merkmale Muster auf, die als QR-Codes, Aztec-Codes oder ArUco-Codes ausgestaltet sind und/oder auf einer zweidimensionalen Oberfläche eines flachen Referenzobjekts angeordnet sind.

Gemäss einer anderen Ausführungsform des erfindungsgemässen Verfahrens sind die bekannten Merkmale als eine Vielzahl verschieden geformter und/oder gemusterter Oberflächen eines dreidimensionalen Referenzobjektes angeordnet.

In einer Ausführungsform mit einem dreidimensionalen Referenzobjekt ist dieses im wesentlichen würfelförmig, tetraedisch, tetrapodisch oder pyramidenförmig, und/oder weist eine Vielzahl im wesentlichen kugelförmiger Referenzkörper auf.

In einer weiteren Ausführungsform mit einem dreidimensionalen Referenzobjekt wird dieses an der Richtung der Schwerkraft ausgerichtet, beispielsweise durch ein freischwingendes Aufhängen des Referenzobjektes an einem Gestell. Das Gestell kann insbesondere in dem Raum befestigt werden, beispielsweise an einer Oberfläche des Raums, und insbesondere mittels einer Klebefläche, eines Saugnapfes, eines Magneten und/oder eines Schraubgewindes des Gestells.

Gemäss einer Ausführungsform umfasst das erfindungsgemässe Verfahren ein Befestigen des Referenzobjektes in dem Raum, insbesondere an einer Oberfläche des Raums, und beispielsweise mittels einer Klebefläche, eines Saugnapfes, eines Magneten und/oder eines Schraubgewindes des Referenzobjektes.

Gemäss einer anderen Ausführungsform umfasst das erfindungsgemässe Verfahren ein Positionieren des Referenzobjektes in bekannter räumlicher Beziehung zu einem Raumpunkt - insbesondere wobei das Referenzobjekt einen gekennzeichneten Anlagepunkt zum Anlegen an diesen Raumpunkt aufweist -, sowie ein Ermitteln der Position und Orientierung des Entfernungsmessgerätes relativ zu dem Raumpunkt.

Gemäss einer weiteren Ausführungsform des erfindungsgemässen Verfahrens werden Merkmaldaten, aufweisend Informationen über bekannte Merkmale mindestens eines bekannten Referenzobjektes, insbesondere einer Vielzahl von Referenzobjekten, in einer Speichereinheit des Entfernungsmessgerätes gespeichert und zum Erkennen des Referenzobjektes bereitgestellt.

In einer Ausführungsform werden die Merkmaldaten einem externen Gerät bereitgestellt, z. B. einem Drucker oder 3D-Drucker, und durch das externe Gerät wird ein Referenzobjekt hergestellt, insbesondere ein flaches Referenzobjekt durch Ausdrucken eines Musters auf Folie oder Papier oder eines dreidimensionalen Referenzobjektes durch Material aufbauende oder abtragende Fertigungsverfahren.

Ein zweiter Aspekt der vorliegenden Erfindung betrifft ein handhaltbares Entfernungsmessgerät zum Ermitteln relativer Koordinaten von Raumpunkten. Das Entfernungsmessgerät weist eine Entfernungsmesseinheit auf, insbesondere einen Laserentfernungsmesser, zum Messen von Entfernungen zu Raumpunkten entlang einer Emissionsrichtung in einem Raum, eine Auswertekomponente, die ausgestaltet ist zur Ableitung und Bereitstellung der gemessenen Entfernungen, und eine Lagebestimmungseinheit zum Ermitteln einer relativen räumlichen Lage des Entfernungsmessgerätes. Gemäss diesem Aspekt der Erfindung weist das Entfernungsmessgerät eine Speichereinheit zum Speichern von Merkmaldaten und zum Bereitstellen der Merkmaldaten an die Lagebestimmungseinheit aufweist, wobei die Merkmaldaten Informationen über bekannte, optisch erfassbare Merkmale eines oder mehrerer bekannter Referenzobjekte umfassen, und die Lagebestimmungseinheit weist mindestens einen Bildsensor auf, der dazu ausgestaltet ist, Referenzbilder zeitlich verknüpft, insbesondere gleichzeitig, mit einem Messen einer Entfernung durch die Entfernungsmesseinheit aufzunehmen, und eine Bildauswertekomponente, die dazu ausgestaltet ist, ein in den von dem mindestens einen Bildsensor aufgenommenen Referenzbildern abgebildetes bekanntes Referenzobjekt basierend auf den bereitgestellten Merkmaldaten zu erkennen und basierend auf der Verteilung der Merkmale in mindestens einem Referenzbild eine Lage des Entfernungsmessgerätes zu ermitteln.

In einer Ausführungsform des Entfernungsmessgerätes gemäss dem zweiten Aspekt der Erfindung ist die Bildauswertekomponente dazu ausgestaltet, basierend auf der Verteilung der Merkmale in mindestens zwei Referenzbildern eine Lageveränderung des Entfernungsmessgerätes zu ermitteln, und die Auswertekomponente ist dazu ausgestaltet, die ermittelte Lageveränderung mit mindestens zwei gemessenen Entfernungen zu verknüpfen.

Dabei ist die Auswertekomponente insbesondere ausgestaltet zur Ableitung und Bereitstellung der ermittelten Lageveränderung, zur Berechnung und Bereitstellung einer Distanz, insbesondere einer Schrägdistanz und/oder eines Höhenunterschiedes, zwischen zwei vermessenen Raumpunkten, und/oder zur Berechnung und Bereitstellung von Positionen in einem dreidimensionalen lokalen Koordinatensystem.

Ein dritter Aspekt der vorliegenden Erfindung betrifft ein weiteres handhaltbares Entfernungsmessgerät mit einer Entfernungsmesseinheit, insbesondere einem Laserentfernungsmesser, zum Messen von Entfernungen zu Raumpunkten entlang einer Emissionsrichtung in einem Raum, einer Auswertekomponente, die ausgestaltet ist zur Ableitung und Bereitstellung der gemessenen Entfernungen, einem Anhaltepunkt zum Anhalten des Entfernungsmessgerätes an einen Oberflächenpunkt auf einer Oberfläche des Raumes, und einer Lagebestimmungseinheit zum Ermitteln einer räumlichen Lage des Entfernungsmessgerätes. Gemäss diesem Aspekt der Erfindung weist das Entfernungsmessgerät eine Speichereinheit zum Speichern von Merkmaldaten und zum Bereitstellen der Merkmaldaten an die Lagebestimmungseinheit auf, wobei die Merkmaldaten Informationen über bekannte, optisch erfassbare Merkmale eines oder mehrerer bekannter Referenzobjekte umfassen, und die Lagebestimmungseinheit weist mindestens einen Bildsensor auf, der dazu ausgestaltet ist, mindestens ein Referenzbild zeitlich verknüpft, insbesondere gleichzeitig, mit einem Anhalten des Entfernungsmessgerätes an einen Oberflächenpunkt aufzunehmen, und eine Bildauswertekomponente, die dazu ausgestaltet ist, in dem mindestens einen Referenzbild Merkmale zu erkennen, und basierend auf der Verteilung der Merkmale in mindestens einem Referenzbild eine relative Position des Oberflächenpunktes zu ermitteln.

In einer Ausführungsform des Entfernungsmessgerätes gemäss dem zweiten oder dritten Aspekt der Erfindung, sind der Bildsensor und die Entfernungsmesseinheit auf dem Entfernungsmessgerät derart angeordnet, dass die Emissionsrichtung der Entfernungsmesseinheit ausserhalb eines Erfassungsbereiches des Bildsensors liegt. Insbesondere sind sie derart angeordnet, dass die Emissionsrichtung und eine Aufnahmerichtung des Bildsensors im wesentlichen orthogonal sind, beispielsweise in einem Winkel von 75° bis 100° zueinander angeordnet sind.

Gemäss einer anderen Ausführungsform des Entfernungsmessgerätes sind der Bildsensor und die Entfernungsmesseinheit auf dem Entfernungsmessgerät derart angeordnet, dass die Emissionsrichtung der Entfernungsmesseinheit innerhalb eines Erfassungsbereiches des Bildsensors liegt, und Umlenkmittel, die insbesondere mindestens einen Spiegel aufweisen, sind vorgesehen und dazu ausgestaltet, eine Aufnahmerichtung des Bildsensors umzulenken, insbesondere derart, dass die Emissionsrichtung und eine Aufnahmerichtung des Bildsensors im wesentlichen orthogonal sind, beispielsweise in einem Winkel von 75° bis 100° zueinander angeordnet sind.

Gemäss einer weiteren Ausführungsform weist das Entfernungsmessgerät eine Anzeigeeinheit zum Anzeigen gemessener und berechneter Entfernungen und/oder von Koordinaten von Raumpunkten und Eingabemittel zum Anwählen von Funktionen des Entfernungsmessgerätes auf. Insbesondere sind die Anzeigeeinheit und die Eingabemittel dabei auf einer ersten Seite, insbesondere Oberseite, des Entfernungsmessgerätes angeordnet, und der Bildsensor auf einer der ersten Seite gegenüberliegenden zweiten Seite, insbesondere Unterseite, des Entfernungsmessgerätes.

In einer weiteren Ausführungsform weist das Entfernungsmessgerät zusätzlich eine Übersichtskamera zur Aufnahme von Bildern in Richtung der Emissionsrichtung auf, und die Anzeigeeinheit ist zusätzlich zum Anzeigen mittels der Übersichtskamera aufgenommener Bilder ausgestaltet.

Gemäss einer anderen Ausführungsform weist das Entfernungsmessgerät gemäss dem zweiten oder dritten Aspekt der Erfindung eine Speichereinheit zum Speichern von Merkmaldaten und zum Bereitstellen der Merkmaldaten an die Lagebestimmungseinheit auf, wobei die Merkmaldaten Informationen über bekannte, optisch erfassbare Merkmale eines oder mehrerer bekannter Referenzobjekte umfassen, und die Bildauswertekomponente ist dazu ausgestaltet, in dem mindestens einen Referenzbild ein abgebildetes bekanntes Referenzobjekt basierend auf den bereitgestellten Merkmaldaten zu erkennen. Insbesondere ist die Bildauswertekomponente dazu ausgestaltet, basierend auf der Verteilung der Merkmale in dem mindestens einem Referenzbild eine Lage des Entfernungsmessgerätes zu ermitteln.

Ein vierter Aspekt der vorliegenden Erfindung betrifft ein System, aufweisend ein handhaltbares Entfernungsmessgerät gemäss dem zweiten oder dritten Aspekt der Erfindung und ein Referenzobjekt, wobei das Referenzobjekt bekannte, durch den Bildsensor erfassbare Merkmale aufweist, die in einem für einen Rückwärtseinschnitt optimierten Muster angeordnet sind, und die bekannten Merkmale des Referenzobjektes in einer Speichereinheit des Entfernungsmessgerätes bereitgestellt werden.

Gemäss einer Ausführungsform des erfindungsgemässen Systems sind dabei das Entfernungsmessgerät und das Referenzobjekt derart ausgestaltet, dass sie zu einer für Transport und Lagerung geeigneten Einheit zusammenfügbar, insbesondere wobei das Entfernungsmessgerät eine Aufnahme für das Referenzobjekt aufweist, oder das Referenzobjekt als eine Hülle des Entfernungsmessgerätes gestaltet ist.

Ein weiterer Aspekt der vorliegenden Erfindung betrifft ein Computerprogrammprodukt mit Programmcode, der auf einem maschinenlesbaren Träger gespeichert ist, zur Ausführung der folgenden Schritte des erfindungsgemässen Verfahrens, insbesondere wenn das Programm auf einer als Auswertekomponente des erfindungsgemässen Entfernungsmessgerätes ausgebildeten elektronischen Datenverarbeitungseinheit ausgeführt wird: Messen der ersten Entfernung, Aufnehmen des ersten Referenzbildes im wesentlichen gleichzeitig mit dem Messen der ersten Entfernung, Erkennen des Referenzobjektes, Abrufen gespeicherter Informationen über die bekannten Merkmale des erkannten Referenzobjektes, und Erkennen von Positionen bekannter Merkmale des Referenzobjektes in dem ersten Referenzbild.

Das erfindungsgemässe handhaltbare Entfernungsmessgerät und das erfindungsgemässe Messverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1a-b ein gattungsgemässes handhaltbares Entfernungsmessgerät mit einem Laserdistanzmesser;

Fig. 2 das indirekte Ermitteln einer Entfernung mittels des Kosinussatzes;

Fig. 3 das Messen einer Entfernung und das gleichzeitige Erfassen einer räumlichen Lage des Entfernungsmessgerätes;

Fig. 4 ein Kamerakoordinatensystem und ein Referenzkoordinatensystem;

Fig. 5a-b die Lokalisierung einer Kameraeinheit anhand einer Verteilung von Bildpunkten eines bekannten Musters auf einer Sensorebene;

Fig. 6 ein erfindungsgemässes handhaltbares Entfernungsmessgerät in einem Querschnitt;

Fig. 7a-b einen ersten und zweiten Messvorgang mit einem erfindungsgemässen handhaltbaren Entfernungsmessgerät;

Fig. 8a ein beispielhaftes dreidimensionales Referenzobjekt zur Verwendung mit einem erfindungsgemässen handhaltbaren Entfernungsmessgerät;

Fig. 8b einen Messvorgang mit einem erfindungsgemässen handhaltbaren Entfernungsmessgerät und dem Referenzobjekt aus Fig. 8a;

Fig. 9a-b zwei beispielhafte Gestelle zum freischwingenden Aufhängen eines dreidimensionalen Referenzobjektes;

Fig. 10 eine erste beispielhafte Ausführungsform eines erfindungsgemässen Verfahrens;

Fig. 11 eine zweite beispielhafte Ausführungsform eines erfindungsgemässen Verfahrens;

Fig. 12a-e verschiedene beispielhafte Anwendungen eines erfindungsgemässen Entfernungsmessgerätes;

Fig. 13a-d zwei beispielhafte Kameraanordnungen eines erfindungsgemässen Entfernungsmessgerätes;

Fig. 14 eine weitere beispielhafte Ausführungsform eines erfindungsgemässen Entfernungsmessgerätes, aufweisend einen Anhaltepunkt;

Fig. 15 ein Erfassen relativer Koordinaten mittels des Entfernungsmessgerätes aus Fig. 14; und

Fig. 16 das Messen einer Entfernung zu einem ersten Punkt und das gleichzeitige Erfassen einer räumlichen Lage des Entfernungsmessgerätes gegenüber einem zweiten Punkt.

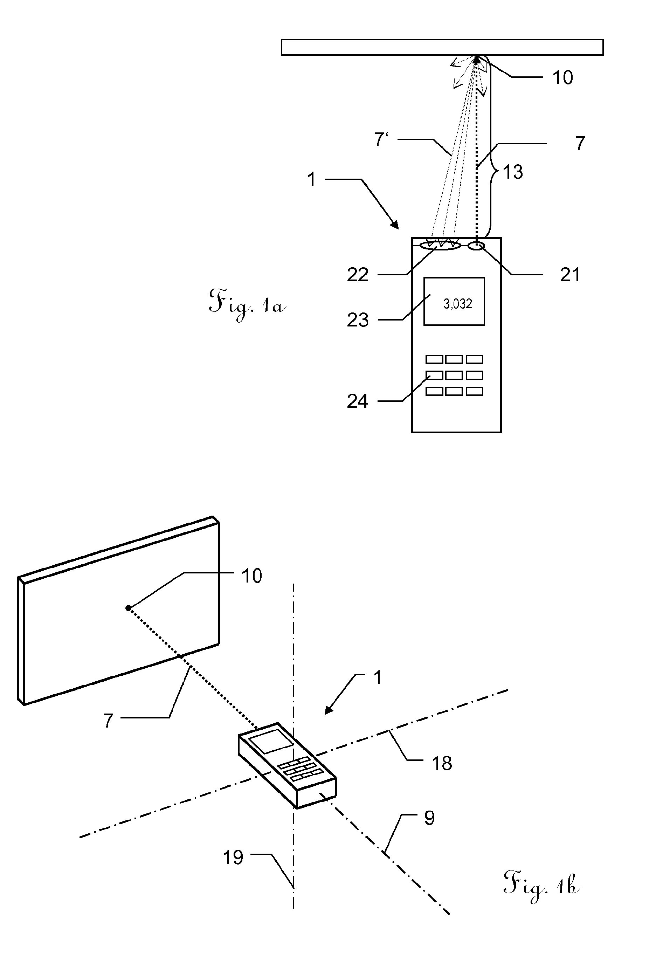

In den Figuren 1a und 1b ist ein gattungsgemässes handhaltbares Entfernungsmessgerät 1 zum Vermessen von Entfernungen in Aussenansicht dargestellt. Es weist ein Gehäuse auf, in dem die notwendigen elektronischen Komponenten angeordnet sind. Das Gehäuse ist dabei so ausgebildet, dass das Entfernungsmessgerät 1 in der Hand gehalten und auch an einem zu vermessenden Punkt definiert angelegt oder angeschlagen werden kann. Am Gehäuse können zu diesem Zweck entsprechende Anlagekanten oder ausklappbare oder aufsteckbare Anschlagelemente angebracht sein, wie sie beispielsweise in der WO 02/50564 beschrieben werden. Das Entfernungsmessgerät 1 beinhaltet an seiner Vorderseite einen Laserentfernungsmesser 20 mit einer Laseraussendeeinheit 21 und einer Laserempfangseinheit 22, die über optische Öffnungen im Gehäuse verfügen. Auf der Oberseite des Geräts befinden sich eine Anzeigevorrichtung 23 in Form eines Displays und Eingabemittel 24 in Form eines Tastenfeldes. Ausserdem kann eine - hier nicht dargestellte - Kamera zur Aufnahme von Bildern in Richtung der Emissionsrichtung vorgesehen sein.

Wie in Figur 1a dargestellt, sendet die Laseraussendeeinheit 21 erfindungsgemäss einen Laserstrahl 7 zu einem Messpunkt 10 auf einer Wand aus. Die Wand weist eine natürlich rauhe Oberfläche auf, von der optische Strahlen streuend reflektiert werden. Ein Teil der gestreut reflektierten Strahlen 7' wird von der Laserempfangseinheit 22 eingesammelt, detektiert und in ein elektrisches Signal umgewandelt. Das Signal wird in an sich bekannter Weise zum Bestimmen des digitalen Werts der Distanz 13 von einer elektronischen Schaltung ausgewertet. Zur Entfernungsermittlung kann z. B. Phasen- oder Laufzeitmessung eingesetzt werden. Dabei wird auch die Erstreckung zwischen der Laserempfangseinheit 22 und einem Messanschlag berücksichtigt. Der durch die Auswertung digital bestimmte Wert der gemessenen Entfernung 13 - von hier beispielsweise 3,032 Metern - wird dann auf dem Display 23 einem Benutzer zur Verfügung gestellt.

Figur 1b zeigt das erfindungsgemässe handhaltbare Entfernungsmessgerät 1, das einen Laserstrahl 7 in der Emissionsrichtung 9 zu einem Messpunkt 10 aussendet. Dargestellt sind auch die orthogonal zur Emissionsrichtung 9 verlaufenden Drehachsen: die Querachse 18 und die Stehachse 19.

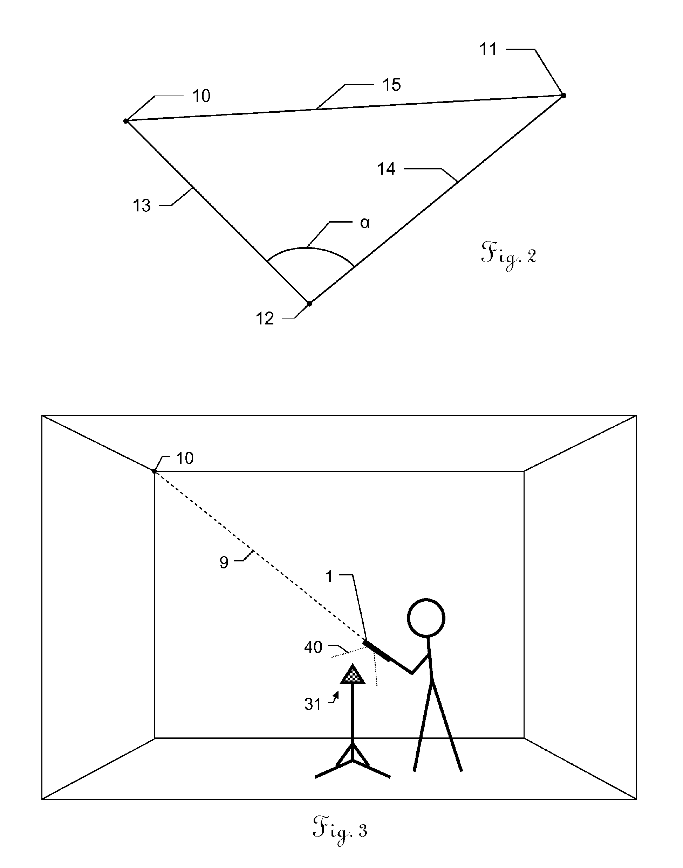

Figur 2 zeigt die trigonometrischen Grundlagen des erfindungsgemässen Verfahrens. Die Länge einer Strecke 15 kann mittels der bekannten Entfernungen 13, 14 von einem beliebigen Raumpunkt 12 zu den Endpunkten 10, 11 der Strecke 15 und dem Winkel $\alpha$ zwischen den Richtungen vom Raumpunkt 12 zu den Endpunkten 10, 11 berechnet werden. Dazu kann insbesondere der Kosinussatz verwendet werden. Der Winkel wird erfindungsgemäss mittels einer optischen Lagebestimmungseinheit ermittelt, die auch einen räumlichen Versatz des Raumpunktes 12 zwischen der ersten Messung und der zweiten Messung erfasst (hier nicht gezeigt).

In Figur 3 wird schematisch ein erster Verfahrensschritt einer beispielhaften Ausführungsform des erfindungsgemässen Verfahrens dargestellt. Ein Benutzer zielt mit dem handhaltbaren Entfernungsmessgerät 1 einen zu vermessenden Punkt 10 - hier einen Eckpunkt eines Raumes - so an, dass die Emissionsrichtung 9 des Messstrahles auf den Punkt zeigt. Das Entfernungsmessgerät 1 weist eine Kamera auf (hier nicht dargestellt), die einen Erfassungsbereich 40 zum Aufnehmen von Bildern aufweist. In diesem Erfassungsbereich 40 befindet sich ein Referenzobjekt 31 (hier dargestellt auf einem Stativ) mit optisch erfassbaren, in bekanntem Muster angeordneten Merkmalen. Während der Benutzer die Messung zu dem Punkt 10 auslöst, nimmt die Kamera - insbesondere vollautomatisch - gleichzeitig oder im wesentlichen gleichzeitig ein Referenzbild des im Erfassungsbereich 40 befindlichen bekannten Referenzobjektes 31 auf. Die Muster des Referenzobjektes 31 erlauben durch Bildauswertung und Rückwärtseinschnitt ein Ermitteln der relativen Lage der Kamera und damit des Entfernungsmessgerätes 1 zum Referenzobjekt 31 in sechs Freiheitsgraden (6DOF). Bleibt das Referenzobjekt 31 in seiner Position unverändert, kann so eine Vielzahl von Messungen innerhalb desselben lokalen Koordinatensystems durchgeführt werden.

Vor Beginn der Messungen kann das Referenzobjekt 31 im Raum referenziert werden. Dies kann insbesondere über ein Messen der Entfernungen zu drei Eckpunkten des Raums - deren Koordinaten zudem in einem übergeordneten Referenzkoordinatensystem bekannt sein können - bei jeweils gleichzeitiger Erfassung des Referenzobjektes 31 erfolgen. Auch ist es möglich, durch ein Einmessen von jeweils drei gemeinsamen Zielpunkten mehrere voneinander unterscheidbare Ziele in ein gemeinsames Referenzkoordinatensystem einzumessen. Durch dieses Vorgehen ist es beispielsweise möglich, die Koordinaten von Messpunkten in verschiedenen Räumen miteinander in Beziehung zu setzen.

Das Referenzobjekt 31 weist einen Satz identifizierbarer Merkmalspunkte bekannter geometrischer Konfiguration auf. Es kann sowohl eine dreidimensionale Struktur aufweisen, z. B. ein Tetraeder bekannter Kantenlänge, oder auch planar sein, z. B. eine Messmarke bekannter Grösse. Die Merkmalspunkte müssen identifizierbar sein: bei einem Tetraeder können die Merkmalspunkte beispielsweise farbcodierte Scheitelpunkte sein, bei einem planaren Referenzobjekt können die Merkmalspunkte beispielsweise barcodeähnlich sein. Auch können die Merkmalspunkte aktiv hergestellt werden, z. B. durch modulierte Infrarot-LEDs.

Weist das Referenzobjekt leuchtende Merkmalspunkte auf, können diese sowohl fortlaufend leuchten als auch im Zusammenspiel mit der Bildaufnahme, dazu kann das Referenzobjekt mit dem Entfernungsmessgerät beispielsweise über eine Bluetooth-Verbindung verbunden sein. So können immer während der Aufnahme eines Referenzbildes gleichzeitig mit der Entfernungsmessung die Merkmalspunkte aufleuchten.

Vorteilhaft können durch die Kamera(s) des Entfernungsmessgerätes 1 fortlaufend Bilder aufgenommen werden, und die Merkmalspunkte immer dann leuchten, wenn das Referenzobjekt im Erfassungsbereich 40 erkannt wurde.

Alternativ können die Merkmalspunkte als Reflektoren ausgestaltet sein, und das Entfernungsmessgerät 1 weist eine Beleuchtungseinheit auf, die Blitzreflexe in Richtung des Erfassungsbereiches 40 aussendet.

Der Satz identifizierbarer Merkmalspunkte kann durch lokale Merkmale, d. h. "natürliche" in der Umgebung vorhandene Merkmale, ergänzt werden, welche z. B. mittels SIFT (SIFT = scale invariant feature transform; skaleninvariante Merkmalstransformation) detektiert und gematcht werden können. Diese lokalen Merkmale können für nachfolgende Punktmessungen verwendet werden und die Genauigkeit und Robustheit der Posenermittlung verbessern.

Alternativ kann das Referenzobjekt 31 eine in mindestens einer Achse rotationssymmetrische Form haben (Zylinder oder Kugel) und ein bekanntes richtungsabhängiges Codemuster aufweisen, z. B. einen Pseudo-Zufallscode. Mit einem derartigen Referenzobjekt ist es einfach, Winkelinformation in ein oder zwei Achsen direkt aus einem einzigen Bild des Referenzobjektes abzuleiten, unabhängig von der Orientierung der Kamera relativ zu dem Referenzobjekt. Diese Information kann benutzt werden, um die Robustheit und Genauigkeit bei der Bestimmung der Kameraorientierung zu verbessern. So eine Anordnung ist insbesondere sinnvoll, wenn die Visierlinie des Lasers und das Sichtfeld der Kamera parallel oder fast parallel zueinander ausgerichtet sind, wie dies häufig bei handhaltbaren Entfernungsmessgeräten der Fall ist, die einen Bildsucher oder eine Überblickskamera aufweisen. Wenn ein zylindrisches Referenzobjekt, z. B. auf einem Stativ, in einer Höhe von einem Meter in der Mitte eines Raumes positioniert wird, kann der Benutzer praktisch jeden Punkt des Raumes anzielen ohne dabei das Referenzobjekt aus dem Blickfeld der Kamera zu verlieren, indem er sich um das Referenzobjekt herumbewegt.

Ist die Kamera (oder eine von mehreren Kameras) in Richtung der Visierlinie des Lasers ausgerichtet, kann in einem optionalen ersten Schritt zur Erhöhung der Genauigkeit zunächst eine Entfernung zu dem Referenzziel gemessen werden.

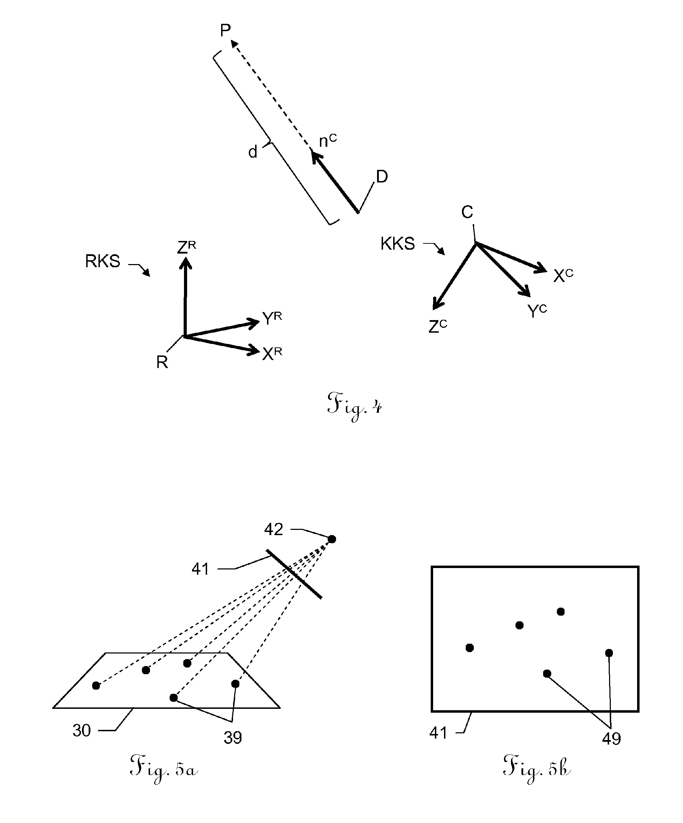

In Figur 4 wird beispielhaft eine mögliche Koordinatentransformation illustriert. Die Koordinaten $P^C$ im Koordinatensystem der Kameraeinheit (Kamerakoordinatensystem, KKS) des Punktes P können mit der Formel

$$P^C = D^C + d\,n^C$$

berechnet werden, wo $D^C$ ein Nullpunkt des Entfernungsmessgerätes im KKS ist, $n^C$ die Messrichtung im KKS, und d die gemessene Entfernung zum Punkt P.

Der Vektor $D^C$ und der Einheitsvektor $n^C$ sind Parameter, die kalibriert werden müssen. Dies wird weiter unten beschrieben.

Die Transformation der Koordinaten des Punktes P vom KKS in das Referenzkoordinatensystem (RKS) kann mittels der Formel

$$P^R = R^{CR}\,P^C + C^R$$

beschrieben werden, wo $R^{CR}$ die Rotationsmatrix ist, die vom KKR zum RKR rotiert, und $C^R$ der Ursprung des KKR gegeben im RKR. $C^R$ und $R^{CR}$ definieren die Position und Orientierung der Kameraeinheit in Relation zum Referenzobjekt. Diese Werte können wie mit Bezug zu den Figuren 5a und 5b beschrieben berechnet werden.

Das RKS muss zwar prinzipiell nicht horizontiert, d. h. referenziert zur Richtung der Gravitation ausgerichtet, sein, eine Gravitationsinformation erleichtert aber die Verarbeitung der Messergebnisse. Dazu kann das Referenzobjekt entweder selbst Informationen über die Gravitationsrichtung bereitstellen, z. B. mittels eines optisch erfassbaren Libellennivelliers oder durch eine Aufhängung des Referenzobjektes. Alternativ oder zusätzlich kann eine Gravitationsrichtung auch durch einen Intialsensor des Entfernungsmessgerätes erfasst und bereitgestellt werden.

Für die Kalibrierung des Vektors $D^C$ und des Einheitsvektors $n^C$ können beispielsweise Entfernungsmessungen zu einer natürlichen oder künstlichen Struktur durchgeführt werden, während die Kamera das Referenzobjekt betrachtet. Die gemessenen Entfernungen und die aufgenommenen Bilder werden dann zur Schätzung der Kalibrierungsparameter verwendet. Eine einfache Möglichkeit ist, eine flache Wand als Struktur zu verwenden, die geometrisch eine vertikale Ebene definiert. Solche Wände sind in Innenräumen zumeist verfügbar. Wenn $n^R$ der Einheitsnormalenvektor dieser Ebene im RKS ist, und t seine Entfernung zum Ursprung des RKS, dann ergibt sich daraus, dass ein Messpunkt $P^R$ auf der Wand liegt, die Skalarbedingung

$$\left(n^R\right)^T P^R = t\ ,$$

wo $(n^R)^T$ die Transponierte von $n^R$ bezeichnet, und $P^R$ durch die Gleichung

$$P^R = R^{CR}\left(D^C + d\,n^C\right) + C^R$$

berechnet werden kann.

Die Figuren 5a und 5b zeigen die Aufnahme der Merkmale 39 durch die Kameraeinheit und ihre Projektion 49 auf eine Bildebene 41.

Die Position $C^R$ und die Orientierung $R^{CR}$ der Kameraeinheit relativ zum RKS wird mittels eines Bildes des Referenzobjektes 30 abgeleitet. In dem Bild des Referenzobjektes muss dazu eine Anzahl von Merkmalspunkten 39 abgebildet sein, deren Koordinaten im RKS vorzugsweise bekannt sind.

Die Position und Orientierung der Kamera kann mit Hilfe der Kollinearitätsgleichungen ermittelt werden, die gemessene Koordinaten 49 in der Bildebene 41 als eine Funktion von Position und Orientierung ausdrücken. Position und Orientierung weisen sechs Parameter auf, die die sechs Freiheitsgrade der Kamera definieren. Jede der gemessenen Koordinaten 49 resultiert in zwei Gleichungen. Insgesamt sind mindestens drei Merkmalspunkte nötig, um die Gleichungen nach den sechs Parametern aufzulösen. Dies ist als Rückwärtseinschnitt bekannt. In Abhängigkeit von der Bekanntheit der geometrischen Konfiguration des Referenzobjekts kann das Verfahren variieren.

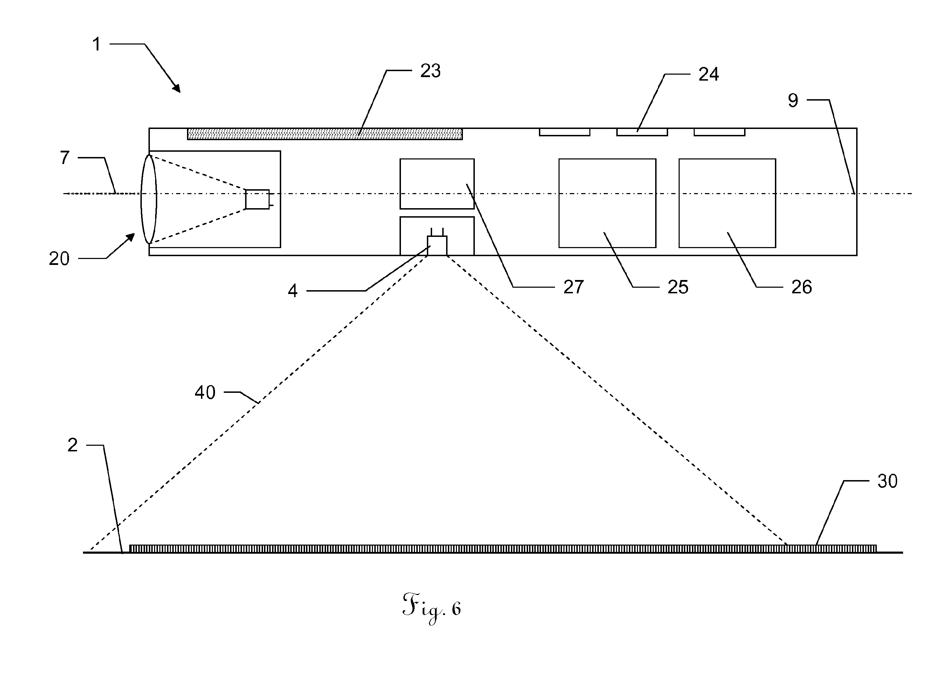

Figur 6 stellt einen Längsschnitt durch eine beispielhafte Ausführungsform des erfindungsgemässen handhaltbaren Entfernungsmessgerätes 1 dar.

Das Entfernungsmessgerät 1 beinhaltet einen Laserentfernungsmesser 20, der dazu ausgestaltet ist, in der Emissionsrichtung 9 einen Laserstrahl 7 auszusenden. Des Weiteren sind ein Display 23 und Eingabemittel 24 dargestellt. Als interne Komponenten werden eine Auswertekomponente 25 und eine Speichereinheit 26 gezeigt.

Ausserdem ist im Entfernungsmessgerät 1 eine (nicht dargestellte) Energiequelle enthalten, insbesondere eine Batterie oder ein Akku, die elektrische Energie für die elektrisch betriebenen Komponenten des Entfernungsmessgeräts 1 bereitstellt. Optional kann das Entfernungsmessgerät 1 weitere Komponenten aufweisen, beispielsweise einen Neigungssensor, insbesondere einen Zwei-Achsen-Neigungssensor auf der Horizontalachse, einen Kompass, einen GPS-Sensor, einen Beschleunigungssensor, insbesondere einen Drei-Achsen-Beschleunigungssensor, oder ein Gyroskop. Die Beschleunigungssensoren bzw. Gyroskope können in Form einer, insbesondere auf MEMS-Technologie basierenden, IMU (Inertial Measurement Unit) eingebaut werden. Eine erste Ausrichtung des Systems kann optional anhand des Kompasses oder des GPS-Sensors erfolgen.

Ein digital vorliegender Entfernungswert kann - wie bei optisch gemessenen Distanzen heute üblich - von der Auswertekomponente 25 des Gerätes gespeichert, weiterverarbeitet oder übertragen und auf dem Display 24 einem Benutzer angezeigt werden.

Erfindungsgemäss weist das dargestellte Entfernungsmessgerät 1 eine Lagebestimmungseinheit auf. Diese umfasst zum einen eine Bilderfassungseinheit mit mindestens einem Bildsensor 4, insbesondere eine Digitalkamera, wobei der Bildsensor 4 dazu ausgestaltet ist Bilder von einem Erfassungsbereich 40 aufzunehmen. Zum anderen umfasst die Lagebestimmungseinheit eine Bildauswertekomponente 27 zum Auswerten der aufgenommenen Bilder.

Das hier dargestellte handhaltbare Entfernungsmessgerät 1 ist so positioniert, dass der Erfassungsbereich 40 der Bilderfassungseinheit teilweise auf ein Referenzobjekt 30 ausgerichtet ist, dass sich auf einer Oberfläche 2 eines Raumes befindet. Das Referenzobjekt 30 ist hier als ein flaches gemustertes Objekt dargestellt, beispielsweise eine bedruckte Folie oder ein bedrucktes Blatt Papier. Das Muster ist bekannt und in der Speichereinheit 26 des Entfernungsmessgerätes 1 hinterlegt. Die Bildauswertekomponente 27 wertet das Bild mit dem teilweise abgebildeten Referenzobjekt 30 (Referenzbild) aus, ruft die in der Speichereinheit 26 gespeicherten Daten ab, und erkennt anhand der Muster das bekannte Referenzobjekt 30. Das Muster, das vorzugsweise für einen Rückwärtseinschnitt optimiert ist, erlaubt es der Bildauswertekomponente 27 eine relative Lage des Entfernungsmessgerätes 1 zum Zeitpunkt der Bildaufnahme zu ermitteln. Durch gleichzeitiges Messen einer Entfernung mittels des Laserentfernungsmessers 20 zu einem angezielten Punkt ist so die relative Position dieses Punktes zum Referenzobjekt 30 feststellbar. Dadurch kann der Punkt mit Koordinaten in einem lokalen Referenzkoordinatensystem beschrieben werden.

Der Bildsensor 4 ist hier auf der Unterseite des Gerätes und orthogonal zur Emissionsachse 9 angeordnet. Es sind aber auch andere vorteilhafte Anordnungen möglich, so kann die Kamera insbesondere etwas nach vorne ausgerichtet sein, z. B. in einem Winkel zwischen 60° und 90° zur Emissionsrichtung des Laserstrahls 7, oder leicht nach hinten gerichtet, z. B. in einem Winkel zwischen 90° und 100° zur Emissionsrichtung.

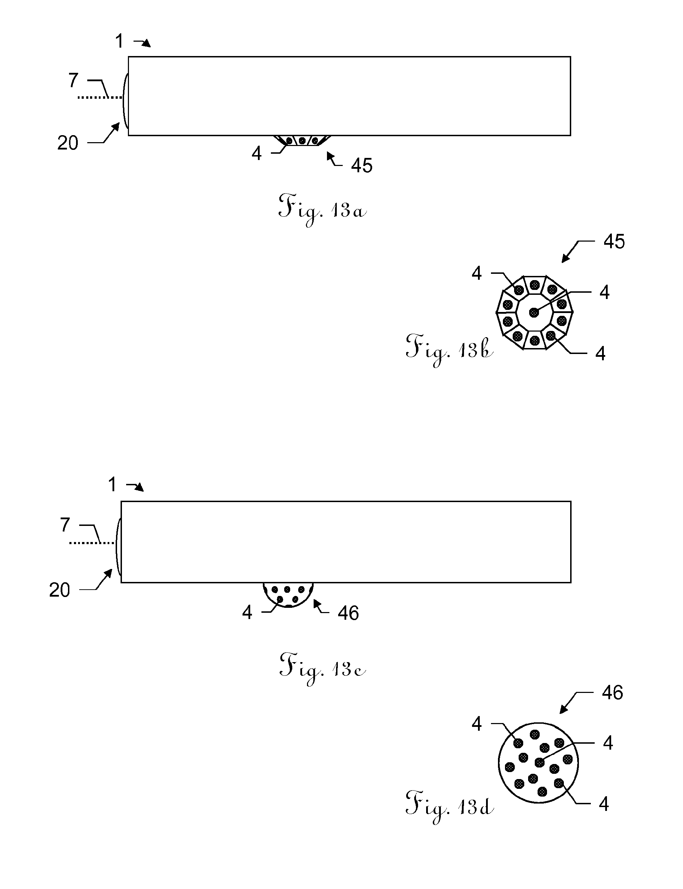

Vorteilhaft ist der Erfassungsbereich 40 möglichst gross gestaltet, um ein Erfassen des Referenzobjektes 30 in möglichst vielen verschiedenen Posen des Entfernungsmessgerätes zu gewährleisten. Neben Weitwinkelkameras kommen auch Fischaugenkameras in Betracht, sowie Lösungen mit mehreren, insbesondere verschieden ausgerichteten Kameras, wie in den Figuren 13a-d dargestellt. Alternativ kann z. B. eine Kamera in Emissionsrichtung ausgerichtet sein, und drei weitere orthogonal zur Emissionsachse - je eine nach unten und je eine seitlich am Gerät nach links und rechts - ausgerichtet, um möglichst einen grossen Bereich des Raumes erfassen zu können.

Optional kann die Bilderfassungseinheit (bzw. der Bildsensor 4) auch beweglich gestaltet sein, insbesondere vom Benutzer per Hand verstellbar oder aber motorisiert gesteuert sein, beispielsweise um das Referenzobjekt 30 im Erfassungsbereich 40 zu behalten. Die jeweils aktuelle Ausrichtung relativ zum Entfernungsmessgerät 1 kann dann beispielsweise über Winkelencoder festgestellt werden. Alternativ kann die Ausrichtung durch eine Kalibrierung bestimmt werden.

Ebenso können optional Umlenkmittel vorgesehen sein, die den Erfassungsbereich 40 einer fest installierten Bilderfassungseinheit umlenken können, z. B. einen nach vorne gerichteten Erfassungsbereich 40 um 90° nach unten lenken. Dazu können die Umlenkmittel insbesondere einen oder mehrere Spiegel aufweisen.

Wie beispielsweise in der EP 2 698 600 A1 dargestellt, kann das Entfernungsmessgerät 1 auch modular aufgebaut sein. So kann z. B. ein Distanzmessmodul mit einem Smartphone verbunden werden, wobei eine Kamera des Smartphones den Bildsensor bereitstellt.

Vorteilhaft kann die Bilderfassungseinheit Markierungsmittel aufweisen, die den Erfassungsbereich 40 optisch markieren, beispielsweise mittels einer Projektion von Lichtpunkten, um dem Benutzer anzuzeigen, ob das Referenzobjekt 30 sich im Erfassungsbereich 40 befindet.

Das Referenzobjekt 30 kann beispielsweise eine Scheibe sein, die zum Transport in eine entsprechende Öffnung des Entfernungsmessgerät 1 eingeführt werden kann. Auch kann das Referenzobjekt 30 als ein Aufkleber zur ein- oder mehrmaligen Verwendung ausgestaltet sein.

Das Referenzobjekt 30 weist ein für einen Rückwärtseinschnitt geeignetes Muster auf. Der Code kann beispielsweise aus ArUco-Markern, QR- oder Aztec-Codes aufgebaut sein, bzw. solche aufweisen. Zusätzlich können in dem Muster weitere durch die Bildauswertekomponente 27 auslesbare Informationen kodiert sein, beispielsweise um das Referenzobjekt 30 eindeutig identifizieren zu können. Auch kann, z. B. in Form eines QR-Codes, ein Weblink zum Herunterladen der Muster des Referenzobjektes 30 bereitgestellt werden.

Alternativ kann das Referenzobjekt auch körperlos vorliegen, z. B. als ein durch einen Projektor auf eine Oberfläche projiziertes bekanntes Muster.

Die Muster des Referenzobjektes 30 sind in der Speichereinheit 26 hinterlegt. Im Fall eines flachen Referenzobjektes 30 kann das Entfernungsmessgerät 1 eine Datenschnittstelle (Bluetooth, USB etc.) zur Verbindung mit einem Drucker aufweisen, um ein Referenzobjekt 30 durch Ausdrucken des gespeicherten Musters auf Papier oder Folie herzustellen. Alternativ kann auch eine Verbindung mit einem in dem Raum vorhandenen Gerät mit einer Anzeigeeinheit hergestellt werden, z. B. einem Smartphone, E-Reader, Laptop oder Fernseher, das das bereitgestellte Muster auf der Anzeigeeinheit anzeigt.

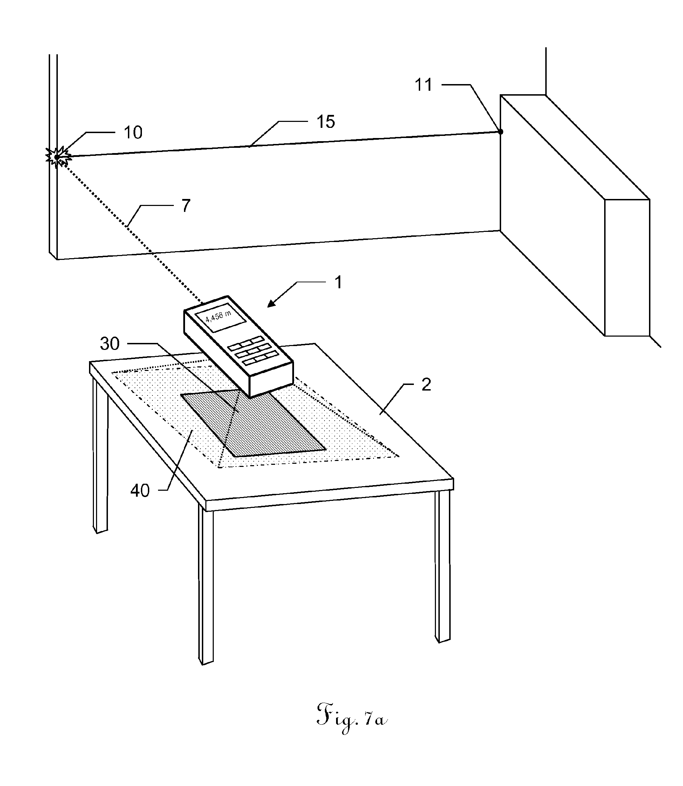

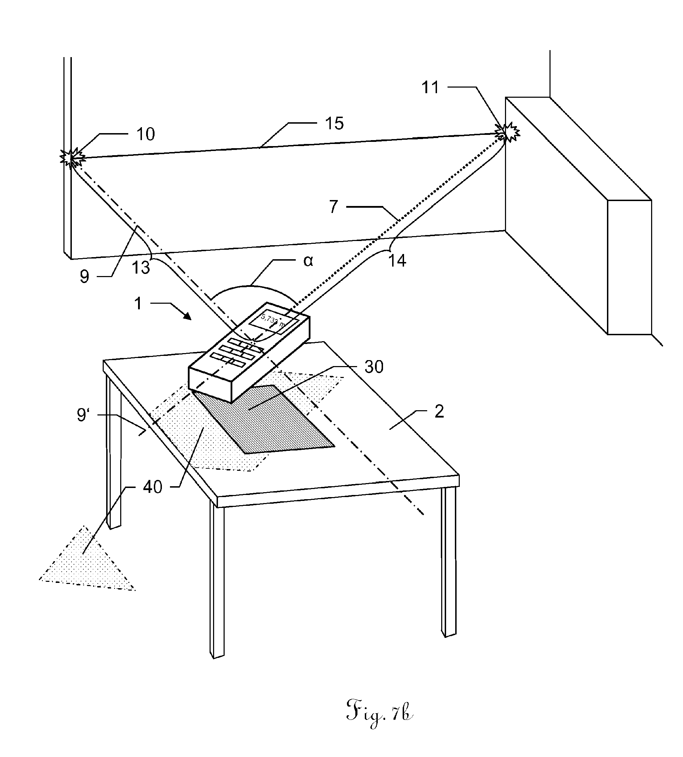

In den Figuren 7a und 7b wird ein beispielhaftes Verfahren illustriert, wie mit dem erfindungsgemässen Entfernungsmessgerät 1 eine Entfernung 15 zwischen zwei entfernten Raumpunkten ermittelt werden kann, zum Beispiel wenn ein Hindernis (hier nicht dargestellt) eine direkte Messung von Punkt 10 zu Punkt 11 verhindert.

In Figur 7a ist eine beispielhafte Ausführungsform des erfindungsgemässen handhaltbaren Entfernungsmessgerätes 1 beim Messen der Entfernung zu einem ersten Raumpunkt 10 dargestellt. In dem Raum wird auf einer relativ zum Messpunkt unbeweglichen Oberfläche - hier die Oberfläche 2 eines Tisches - ein Referenzobjekt 30 plaziert. Dieses ist in diesem Beispiel als ein flaches Objekt mit einer gemusterten Oberfläche ausgebildet, beispielsweise als eine bedruckte Folie. Um sicherzustellen, dass das Referenzobjekt während der Messungen ortsfest bleibt, kann es Mittel zum Fixieren an der Oberfläche 2 aufweisen. Der Benutzer zielt mit dem Laserstrahl 7 den ersten Raumpunkt 10 an und löst eine Entfernungsmessung aus. Dadurch wird im wesentlichen gleichzeitig die Aufnahme eines Referenzbildes ausgelöst, wobei sich das Referenzobjekt 30 zumindest teilweise im Erfassungsbereich 40 des Bildsensors befinden muss. Die Bildauswertekomponente des Entfernungsmessgerätes 1 wertet das aufgenommene Referenzbild aus und erkennt darin anhand dessen Muster das bekannte Referenzobjekt 30. Das für einen Rückwärtseinschnitt optimierte Muster erlaubt es der Bildauswertekomponente eine relative Ausrichtung der Emissionsrichtung 9 und eine relative Lage bzw. Pose des Entfernungsmessgerätes 1 zum Zeitpunkt der Bildaufnahme und damit der Entfernungsmessung zu ermitteln. Dadurch ist die relative Position des Raumpunktes 10 zum Referenzobjekt 30 feststellbar, so dass der Raumpunkt 10 mit Koordinaten in einem lokalen Referenzkoordinatensystem beschrieben werden kann.

In Figur 7b ist das erfindungsgemässe handhaltbare Entfernungsmessgerät 1 beim Messen zu dem zweiten Raumpunkt 11 dargestellt. Die Lage des Referenzobjektes 30 ist unverändert. Der Benutzer zielt mit dem Laserstrahl 7 den zweiten Raumpunkt 11 an, wobei sich das Referenzobjekt 30 zumindest teilweise im Aufnahmebereich 40 befindet. Im wesentlichen gleichzeitig mit der zweiten Entfernungsmessung wird ein zweites Referenzbild aufgenommen und anhand dessen eine relative Lage bzw. Pose des Entfernungsmessgerätes 1 zum Zeitpunkt der zweiten Entfernungsmessung zu ermitteln. Dadurch ist auch die relative Position des zweiten Raumpunktes 11 zum Referenzobjekt 30 feststellbar.

Zum einen kann nun aus der ermittelten Lageveränderung (Winkel und Versatz) des Entfernungsmessgerätes 1 zwischen der ersten und der zweiten Entfernungsmessung und den gemessenen Entfernungen 13, 14 zu den beiden Raumpunkten 10, 11 durch die Auswerteeinheit 25 direkt die gesuchte Entfernung 15 zwischen den Messpunkten 10, 11 berechnet werden. Zum anderen können die beiden Raumpunkte 10, 11 mit Koordinaten in demselben lokalen Referenzkoordinatensystem beschrieben werden. Solange das Referenzobjekt 30 in seiner Lage unverändert bleibt, können theoretisch beliebig viele weitere Punkte in dem Raum in demselben Koordinatensystem beschrieben werden.

In einer Ausführungsform muss das Referenzobjekt 30 nicht notwendigerweise bei jeder Messung im Aufnahmebereich 40 des Bildsensors sein. Wenn erst einmal eine räumliche Lage des Entfernungsmessgerätes 1 gegenüber dem Referenzobjekt 30 bekannt ist, können, wie schon weiter oben unter Bezug auf Figur 3 beschrieben, lokale Merkmale in den Referenzbildern erkannt und durch Mapping in das Referenzkoordinatensystem übertragen werden. Diese Verbindungspunkte werden dann bei folgenden Entfernungsmessungen zur Lagebestimmung des Entfernungsmessgerätes benutzt.

Dies ist als "simultaneous localization and mapping" (SLAM) bekannt. Da sich die Fehler der mittels SLAM geschätzten räumlichen Lage des Entfernungsmessgerätes 1 mit der Zeit exponentiell erhöhen, kann der Benutzer gelegentlich den Bildsensor auf das Referenzziel ausrichten, um die Fehler für folgende Messungen wieder zu reduzieren. Ausserdem kann so der durch das SLAM entstandene Fehler mittels einer Closed-Loop-Optimierung minimiert werden.

Ermittelte Lagedaten des Gerätes und Messpositionen können beispielsweise auch unmittelbar dazu verwendet werden, ein Raummodell zu erstellen (2D oder 3D) - oder um mehrere Einzelbilder einer Übersichtskamera zueinander zu orientieren bzw. miteinander zu verknüpfen.

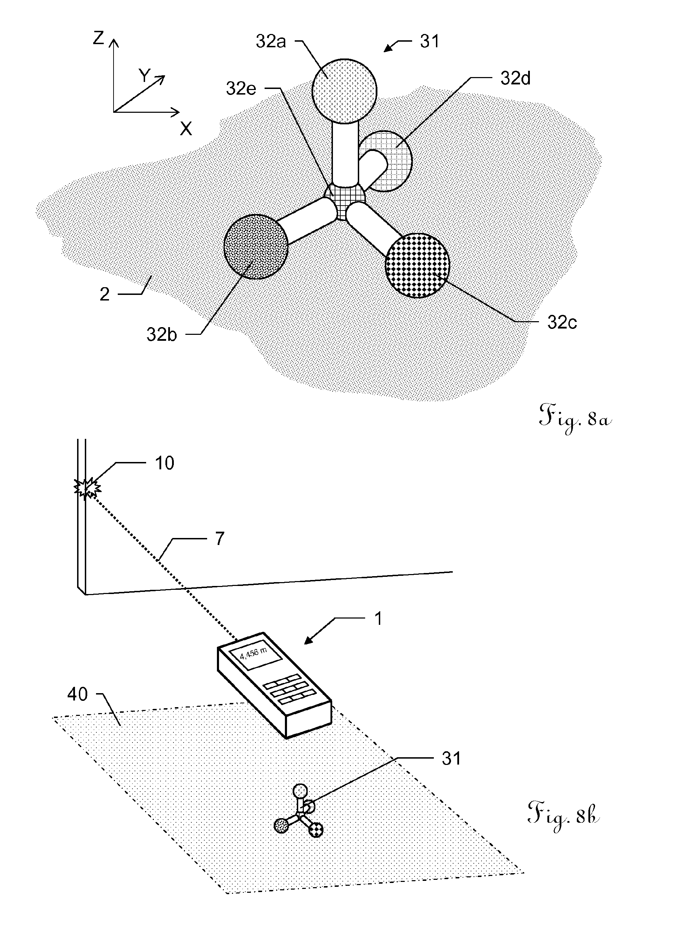

Ein Nachteil eines zweidimensionalen Referenzobjektes 30 ist, dass unter bestimmten Konfigurationen, einige Freiheitsgrade nur schlecht bestimmt werden können. Dieses Problem kann insbesondere durch Verwendung eines dreidimensionalen Referenzobjektes 31 behoben werden. Die Figuren 8a und 8b zeigen eine beispielhafte Ausführungsform eines dreidimensionalen Referenzobjekts 31 zur Verwendung mit dem erfindungsgemässen Verfahren. In Figur 8a ist das beispielhafte Referenzobjekt 31 im Detail dargestellt, in Figur 8b im Rahmen eines Messvorganges eines erfindungsgemässen Entfernungsmessgerätes 1. Das Referenzobjekt 31 ist in diesem Beispiel als ein Tetrapode ausgestaltet, wobei an den Enden der vier Arme sowie im Zentrum des Tetrapoden jeweils ein kugelförmiger Referenzkörper 32a-e vorgesehen ist. Jeder der fünf Referenzkörper 32a-e weist ein Muster auf, das ihn von den anderen optisch unterscheidbar macht und Drehsymmetrien verhindert.

Die gewählte Anordnung ermöglicht es dem Bildsensor des Entfernungsmessgerätes 1, immer mindestens drei Referenzkörper 32a-e abzubilden, wenn das Referenzobjekt 31 im Erfassungsbereich 40 liegt. Das Referenzobjekt 31 ist vorzugsweise so gestaltet, dass es auf einer planaren Oberfläche 2 wackelfrei zu liegen kommt. Auch durch dieses Referenzobjekt 31 kann ein lokales Referenzkoordinatensystem (mit den Achsen X, Y, Z) definiert werden, in dem das Entfernungsmessgerät 1 und damit auch ein von diesem gemessener Raumpunkt 10 referenziert werden kann.

Wie schon mit Bezug zu Figur 6 dargestellt, sind die Muster des Referenzobjektes 31 in der Speichereinheit 26 hinterlegt. Im Fall eines dreidimensionalen Referenzobjektes 31 kann das Entfernungsmessgerät 1 eine Datenschnittstelle (Bluetooth, USB etc.) zur Verbindung mit einem 3D-Drucker oder einer anderen Maschine aufweisen, um ein Referenzobjekt 31 durch Material aufbauende oder abtragende Fertigungsverfahren herzustellen.

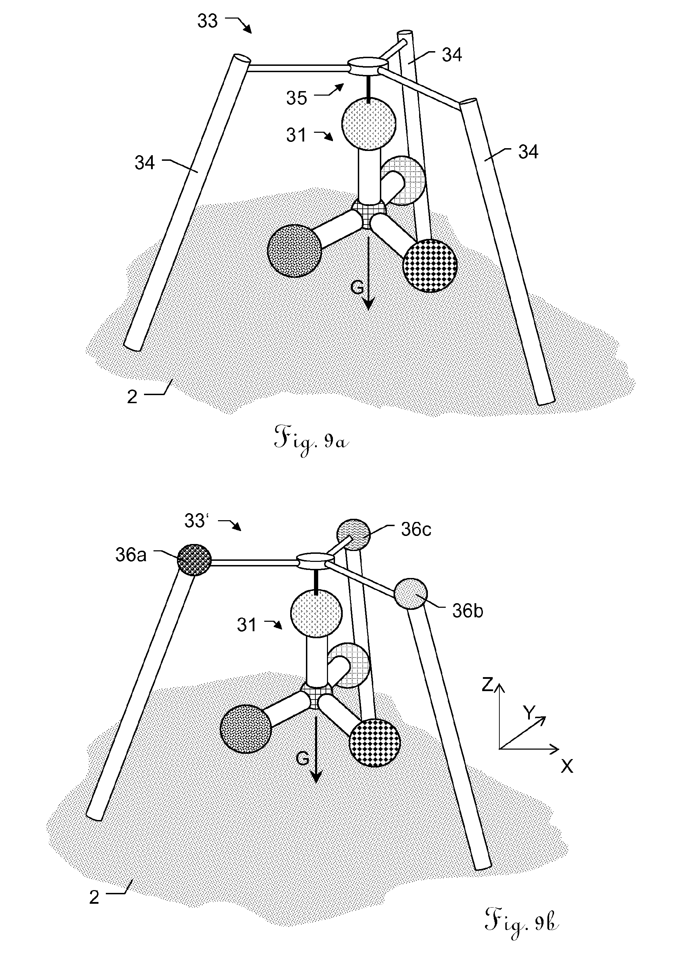

In den Figuren 9a und 9b ist das dreidimensionale Referenzobjekt 31 aus den Figuren 8a und 8b an einem Gestell 33, 33' aufgehängt dargestellt. Das Gestell 33, 33' ist jeweils ausgestaltet mit drei auf die Oberfläche 2 zu stellenden Füssen 34 einer Aufhängevorrichtung 35 an der das Referenzobjekt 31 so befestigt ist, dass es sich frei in Richtung der Schwerkraft G ausrichten kann.

Ein solches Aufhängen des Referenzobjektes 31 ermöglicht es, Koordinaten an der Richtung der Gravitation G auszurichten, anstatt an einer Oberfläche 2 des Raums, auf die das Referenzobjekt 31 gelegt wird (siehe Figur 8a). In Figur 9b weist das Gestell 33' zusätzliche Referenzkörper 36a-c auf, die sich in ihren Mustern wiederum von denen des Referenzobjektes 31 unterscheiden. Dadurch können in einem anhand dieser Vorrichtung definierten lokalen Referenzkoordinatensystem (mit den Achsen X, Y, Z, und der Richtung der Gravitation G) Punkte sowohl mit Koordinaten relativ zu der Oberfläche 2 als auch relativ zur Richtung der Schwerkraft G beschrieben werden.

Alternativ kann das Referenzobjekt 31 dazu ausgestaltet sein, sich aktiv an der Richtung der Gravitation G auszurichten. Dazu kann es insbesondere einen entsprechenden Sensor und einen Motor aufweisen.

Optional kann das aufgehängte Referenzobjekt 31 zusätzlich ferromagnetisch und damit als eine Kompassnadel ausgestaltet sein, sodass aus den Referenzbildern eine Richtung des Erdmagnetfelds ableitbar sein kann.

Die Füsse 34 des Gestells 33 können optional mit Saugnäpfen oder anderen Mitteln an der Oberfläche 2 befestigbar sein.

Sofern das Entfernungsmessgerät selbst geeignete Neigungs- bzw. Beschleunigungssensoren zur Ermittlung der Richtung der Gravitation G aufweist, kann eine Ausrichtung des lokalen Referenzkoordinatensystems an der Gravitation zusätzlich oder alternativ auch mittels dieser Sensoren erfolgen.

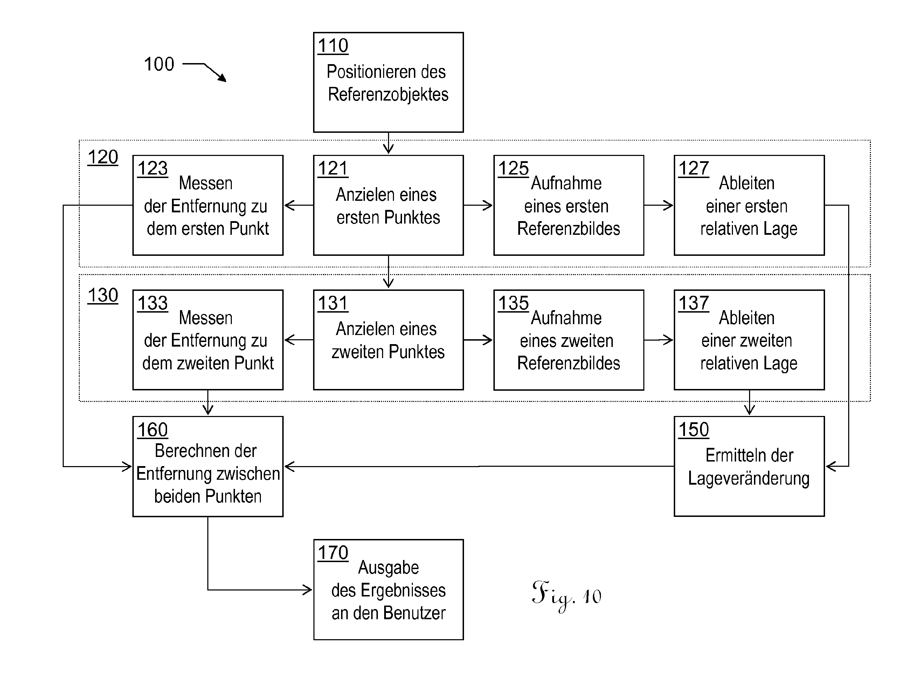

Figur 10 zeigt ein Flussdiagramm, das die einzelnen Schritte einer ersten beispielhaften Ausführungsform eines erfindungsgemässen Messverfahrens 100 illustriert.

Zu Beginn des Verfahrens 100 positioniert der Benutzer in einem ersten Schritt 110 das dem Entfernungsmessgerät bekannte Referenzobjekt so im Raum, das es sich während der folgenden Entfernungsmessungen jeweils im Aufnahmebereich des Bildsensors befindet.

Danach startet der Benutzer den ersten Messvorgang 120, indem er einen ersten zu vermessenden Punkt mit dem Entfernungsmessgerät anzielt 121 und mittels des Entfernungsmessgerätes eine Entfernung zu diesem ersten Punkt misst 123. Während dieser Entfernungsmessung nimmt der Bildsensor des Entfernungsmessgerätes vollautomatisch ein Bild des Referenzobjektes auf 125. Die Bildauswerteeinheit erkennt das Referenzobjekt in dem Bild und leitet basierend auf den in bekannter Weise angeordneten Mustern des Referenzobjektes eine erste relative Lage des Entfernungsmessgerätes ab 127.

Anschliessend startet der Benutzer durch Anzielen 131 eines zweiten zu vermessenden Punktes und Auslösen einer Entfernungsmessung 133 zu diesem zweiten Punkt den zweiten Messvorgang 130. Wieder nimmt der Bildsensor vollautomatisch ein Bild des Referenzobjektes auf 135, und wieder leitet die Bildauswerteeinheit basierend auf den Mustern des Referenzobjektes in dem Bild eine zweite relative Lage des Entfernungsmessgerätes ab 137.

Im folgenden Schritt 150 bestimmt die Auswerteeinheit des Entfernungsmessgerätes einen Unterschied zwischen der ersten und der zweiten relativen Lage und ermittelt so eine absolute Lageveränderung des Gerätes, insbesondere einen Raumwinkel und einen Versatz zwischen einer ersten und zweiten Emissionsrichtung der Messstrahlung.

Aus den in den beiden Messvorgängen 120, 130 gemessenen Entfernungen und der ermittelten Lageveränderung 150 kann dann eine räumliche Entfernung zwischen den beiden Punkten berechnet werden 160. Das Ergebnis kann dann schliesslich auf einer Anzeigeeinheit des Gerätes an den Benutzer ausgegeben werden.

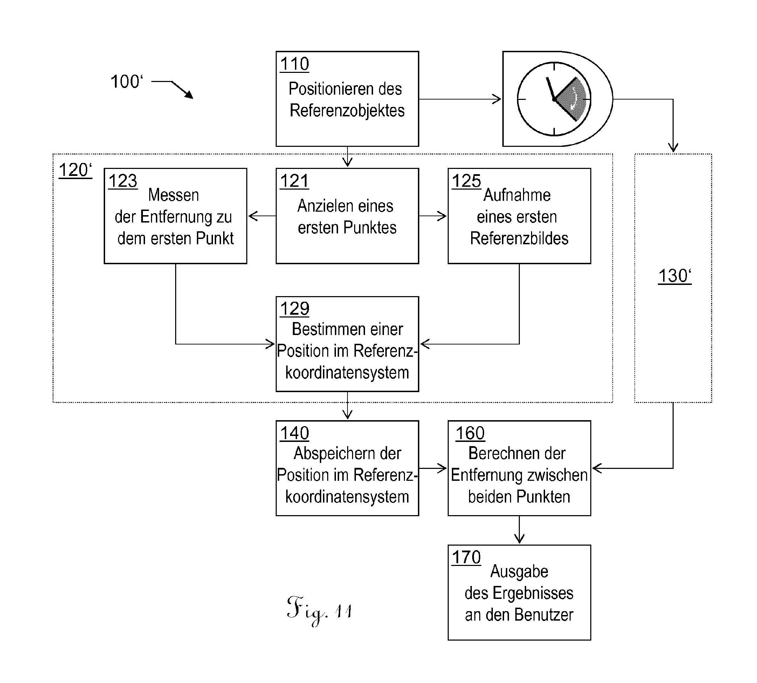

Figur 11 zeigt ein Flussdiagramm, das die einzelnen Schritte einer zweiten beispielhaften Ausführungsform eines erfindungsgemässen Messverfahrens 100' illustriert.

Auch im Rahmen dieses Verfahrens 100' wird zunächst das Referenzobjekt positioniert 110. Danach führt der Benutzer einen ersten Messvorgang 120' aus, der sich von dem ersten Messvorgang des in Figur 10 dargestellten Verfahrens dadurch unterscheidet, dass - anstelle des Ableitens einer ersten relativen Lage des Entfernungsmessgerätes - direkt basierend auf dem Referenzbild und der gemessenen Entfernung zu dem ersten Punkt eine Position dieses Punktes in einem Referenzkoordinatensystem bestimmt wird 129. Anschliessend wird diese Position gespeichert 140.

Ein zweiter Messvorgang 130' oder - prinzipiell beliebig viele - weitere Messvorgänge können dann mit einem - prinzipiell beliebig grossen - zeitlichen Versatz durchgeführt werden (beispielsweise nach einer kurzen Pause oder auch am folgenden Tag), sofern das Referenzobjekt währenddessen nicht bewegt wird. Vorzugsweise weist das Referenzobjekt daher Befestigungsmittel zum Befestigen an einer Oberfläche auf (z. B. Saugnapf, Klebefläche oder Magnete).

Da der zweite Messvorgang 130' prinzipiell identisch mit dem ersten Messvorgang 120' ist (mit dem Unterschied, dass ein zweiter Punkt vermessen wird, und ein zweites Referenzbild aufgenommen wird), wird er hier vereinfacht und ohne Unterschritte dargestellt. Auch für den im zweiten Messvorgang 130' vermessenen zweiten Punkt wird eine Position im lokalen Referenzkoordinatensystem bestimmt. Ein Berechnen 160 der Entfernung zwischen den beiden Punkten erfolgt dann anhand der abgespeicherten Koordinaten des ersten Punktes und der gerade ermittelten Koordinaten des zweiten Punktes. Die Ausgabe 170 des Ergebnisses erfolgt dann wieder analog zum Verfahren aus Figur 10.

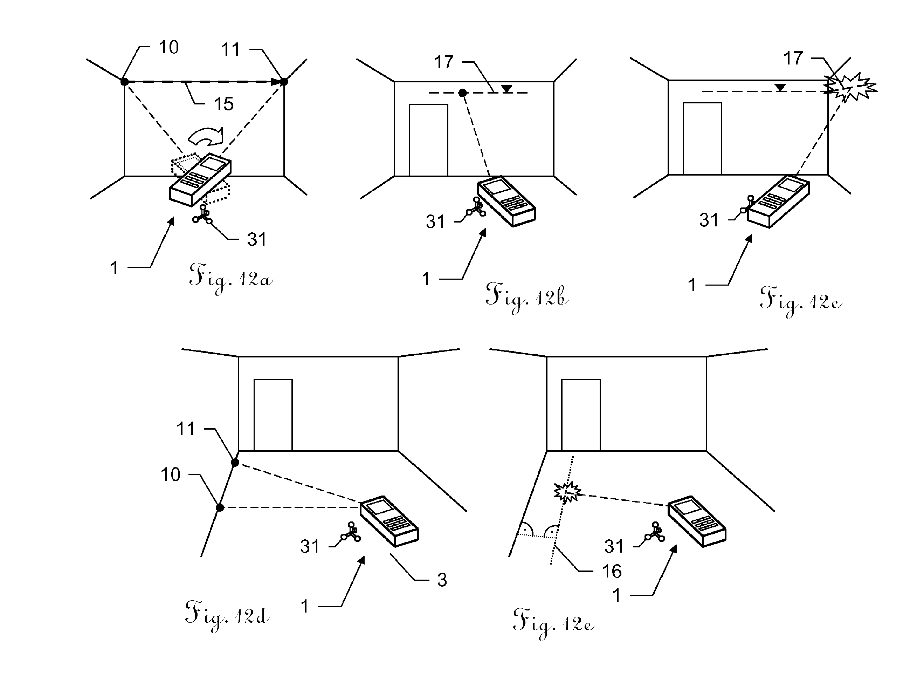

In den Figuren 12a bis 12e werden beispielhaft Messverfahren dargestellt, die mit dem erfindungsgemässen handhaltbaren Entfernungsmessgerät 1 und dessen erfindungsgemässen bildbasierten Lage-Erfassungsfunktionalität durchgeführt werden können.

Figur 12a illustriert ein Verfahren zur Bestimmung eines Spannmasses, d. h. einer Entfernung zwischen zwei Punkten, von einem entfernten Standpunkt aus. Dafür wird zunächst ein erster Messpunkt 10 angezielt und vermessen. Danach wird das Entfernungsmessgerät 1 geschwenkt, um einen zweiten Messpunkt 11 anzuzielen, dessen Abstand 15 zum ersten Messpunkt 10 ermittelt werden soll. Dabei ist insbesondere ein Modus kontinuierlichen Messens ("Tracking-Modus") möglich, bei dem für jeden angezielten Punkt der Abstand 15 zum ersten Messpunkt 11 auf dem Display angezeigt wird.

Die Figuren 12b und 12c illustrieren ein Verfahren zur einfachen Bestimmung einer vertikalen Entfernung eines Messpunktes zu einer Horizontalebene 17, welche durch einen ersten Messpunkt 10 definiert wird. Dazu wird nach dem Starten der Applikation eine Referenzhöhe (z. B. ein Punkt an einer Wand) gemessen. Anschliessend wird die Referenzhöhe an eine beliebige Stelle übertragen. Dazu wird das Entfernungsmessgerät 1 beispielsweise auf einen Punkt auf einer anderen Wand ausgerichtet und die Messung ausgelöst. Auf dem Display wird dann eine relative Höhe des Laserpunktes zur durch die Referenzhöhe definierten Horizontalebene 17 angezeigt. Durch elevative Orientierungsvariation des Entfernungsmessgeräts 1 und erneutes Messen kann beispielsweise ein zweiter Messpunkt auf derselben Höhe, oder einer gewünschten anderen Höhe markiert werden. Dabei ist auch ein Modus kontinuierlichen Messens ("Tracking-Modus") möglich, in dem ein Erreichen der Referenzhöhe oder einer vom Benutzer eingestellten anderen Höhe automatisch angezeigt wird oder kontinuierlich die Entfernung eines aktuellen Messpunktes von dieser Höhe angezeigt wird.

Die Figuren 12d und 12e illustrieren ein weiteres mit dem erfindungsgemässen handhaltbaren Entfernungsmessgerät ausführbares Verfahren. Mittels des dargestellten Verfahrens ist die Bestimmung eines orthogonalen Abstandes eines Messpunktes zu einer Geraden, die durch zwei erste Messpunkte 10, 11 definiert wird, möglich. Dazu zielt der Benutzer zunächst einen Messpunkt 10 an und misst dessen Entfernung und die aktuelle Ausrichtung des Entfernungsmessgerätes 1. Anschliessend wiederholt der Benutzer dies mit einem zweiten Messpunkt 11. Dadurch wird eine Gerade durch die beiden Messpunkte 10, 11 definiert. Alle Messungen werden als Projektion auf die Horizontale behandelt. Nun zielt der Benutzer einen dritten Messpunkt an; auf dem Display wird der Abstand des Punktes zur Geraden angezeigt. Der Benutzer kann nun den Laserpunkt bewegen, bis ein gewünschter Abstand gefunden ist. Insbesondere kann mit dieser Funktion eine Parallele 16 zur Geraden bestimmt werden.

In den Figuren 13a-d werden beispielhaft zwei alternative Kameraanordnungen 45, 46 dargestellt. In den Figuren 13a und 13c ist jeweils ein handhaltbares Entfernungsmessgerät 1 in einer Seitenansicht gezeigt mit einem Laserentfernungsmesser 20, der dazu ausgestaltet ist, einen Laserstrahl 7 in einer Emissionsrichtung auszusenden. Der Aufbau der hier gezeigten Geräte entspricht im wesentlichen dem in Figur 6 gezeigten. In den Figuren 13b und 13d ist die jeweilige Kameraanordnung 45, 46 in einer Draufsicht gezeigt. Mit diesen Kameraanordnungen 45, 46 ist es möglich, eine Vielzahl von Einzelbildern gleichzeitig aufzunehmen, wobei der Erfassungsbereich gegenüber einem einzelnen Bildsensor 4 deutlich vergrössert ist, sodass ein Aufnahmewinkel bis zu 180° oder sogar darüber hinaus betragen kann. Optional kann aus den Einzelbildern ein Weitwinkelbild zusammengesetzt werden.

Die in den Figuren 13a und 13b gezeigte Kameraanordnung 45 verfügt über einen ersten, beispielsweise orthogonal oder annähernd zur Emissionsrichtung des Messstrahls 7 ausgerichteten Bildsensor 4 und eine Vielzahl weiterer Bildsensoren 4, die kreisförmig um die erste Kamera 41 angeordnet und in unterschiedliche Zielrichtungen ausgerichtet sind. In einer hier nicht gezeigten Variante sind die weiteren Bildsensoren 4 halbkreisförmig angeordnet, sodass keine nach hinten gerichteten Bilder erfasst werden.

Die in den Figuren 13c und 13d gezeigte Kameraanordnung 46 ist in Form einer Halbsphäre ausgestaltet, auf deren Oberfläche eine Vielzahl von Bildsensoren 4 angeordnet sind.

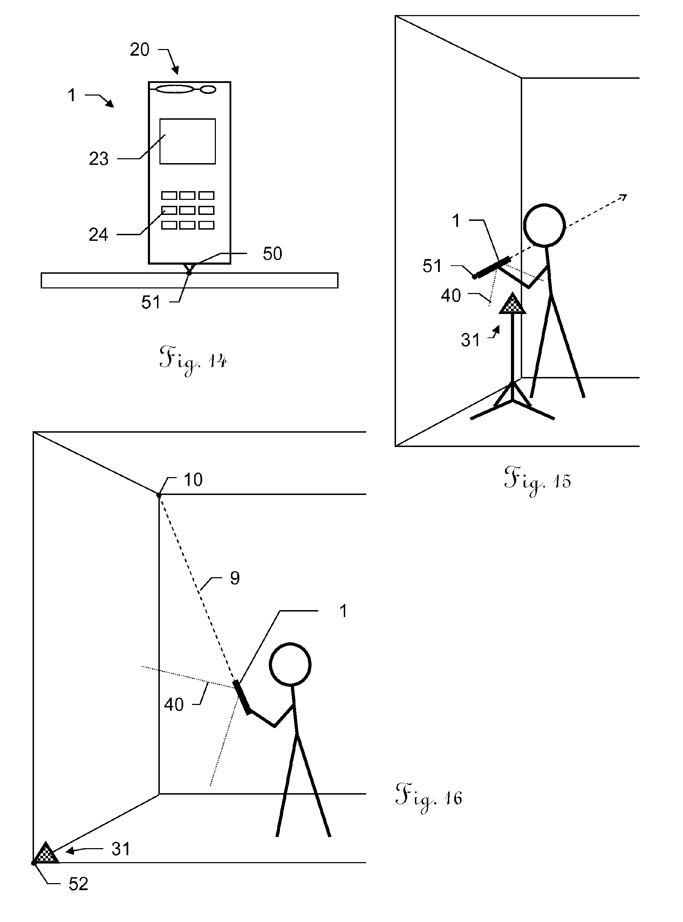

Figur 14 zeigt eine weitere Ausführungsform eines erfindungsgemässen handhaltbaren Entfernungsmessgerätes 1.

Gemäss dieser Ausführungsform weist das Entfernungsmessgerät 1 zusätzlich einen Anhaltepunkt 51 auf, dessen Position auf dem Entfernungsmessgerät 1 bekannt ist und der dazu bestimmt ist, an einen Punkt 50 einer Oberfläche eines Raumes angehalten zu werden. Dadurch kann dann beispielsweise eine Entfernung von diesem Oberflächenpunkt 50 bis zu einem durch den Laserentfernungsmesser 20 angezielten Raumpunkt ermittelt werden. Hier ist der Anhaltepunkt 51 als eine Spitze dargestellt, er kann alternativ aber natürlich auch durch einen Eckpunkt des Entfernungsmessgerätes 1 gebildet werden.

Der Anhaltepunkt 51 kann optional ausziehbar oder ausklappbar gestaltet sein. Er kann vorzugsweise einen taktilen oder optischen Sensor aufweisen, der feststellt, ob er an eine Oberfläche gehalten wird oder nicht, sodass von dem Gerät die zusätzliche Entfernung eingerechnet werden kann (wenn es sich bei dem Anhaltepunkt 51 nicht ohnehin um die Basis für die Entfernungsberechnung handelt). Alternativ kann das Anhalten auch über die Eingabemittel 24 durch einen Benutzer angezeigt werden.

Figur 15 zeigt das Entfernungsmessgerät 1 aus Figur 14 beim Ausführen eines ersten Verfahrensschrittes einer beispielhaften Ausführungsform des erfindungsgemässen Verfahrens. Ein Benutzer hält das handhaltbare Entfernungsmessgerät 1 (mit dem in Figur 14 dargestellten Anhaltepunkt) an einen zu vermessenden Punkt 50 an der einer Wand des Raumes an. Das Entfernungsmessgerät 1 weist eine - hier nicht dargestellte - Kamera auf, die einen Erfassungsbereich 40 zum Aufnehmen von Bildern aufweist. Ein Referenzobjekt 31 mit optisch erfassbaren, in bekanntem Muster angeordneten Merkmalen befindet sich im Erfassungsbereich 40 der Kamera. Sobald das Gerät erkennt, dass es an einen Oberflächenpunkt 50 angehalten wird, oder sobald der Benutzer dies dem Gerät signalisiert, nimmt die Kamera - insbesondere vollautomatisch - gleichzeitig oder im wesentlichen gleichzeitig ein Referenzbild des im Erfassungsbereich 40 befindlichen bekannten Referenzobjektes 31 auf. Die Muster des Referenzobjektes 31 erlauben durch Bildauswertung und Rückwärtseinschnitt ein Ermitteln der relativen Lage der Kamera und damit des Entfernungsmessgerätes 1 zum Referenzobjekt 31 in sechs Freiheitsgraden (6DOF). Bleibt das Referenzobjekt 31 in seiner Position unverändert, kann so eine Vielzahl von Positionsmessungen innerhalb desselben lokalen Koordinatensystems durchgeführt werden - sowohl mittels des in Figur 14 gezeigten Anhaltepunkts als auch (wie z. B. in Figur 3 gezeigt) mittels Laserentfernungsmesser. Wie schon mit Bezug auf Figur 3 beschrieben, kann das Referenzobjekt 31 vor Beginn der Messungen im Raum referenziert werden, oder es können mehrere voneinander unterscheidbare Ziele in ein gemeinsames Referenzkoordinatensystem eingemessen werden.

Figur 16 zeigt eine Abwandlung des in Figur 3 gezeigten Verfahrens. Dabei weist das Referenzobjekt 31 an definierter Position einen Anlagepunkt auf, der dazu ausgestaltet ist, an einen Oberflächenpunkt 52 angelegt zu werden. Im gezeigten Beispiel ist dies ein Eckpunkt des Raumes.

Wie schon mit Bezug auf Figur 3 beschrieben, zielt der Benutzer mit dem handhaltbaren Entfernungsmessgerät 1 einen zu vermessenden Punkt 10 - hier einen weiteren Eckpunkt des Raumes - so an, dass die Emissionsrichtung 9 des Messstrahles auf den Punkt 10 zeigt. Das Entfernungsmessgerät 1 weist eine Kamera auf (hier nicht dargestellt), die einen Erfassungsbereich 40 zum Aufnehmen von Bildern aufweist. In diesem Erfassungsbereich 40 befindet sich das Referenzobjekt 31 mit optisch erfassbaren, in bekanntem Muster angeordneten Merkmalen. Während der Benutzer die Messung zu dem Punkt 10 auslöst, nimmt die Kamera gleichzeitig oder im wesentlichen gleichzeitig ein Referenzbild des im Erfassungsbereich 40 befindlichen bekannten Referenzobjektes 31 auf. Die Muster des Referenzobjektes 31 erlauben durch Bildauswertung und Rückwärtseinschnitt ein Ermitteln der relativen Lage der Kamera und damit des Entfernungsmessgerätes 1 zum Referenzobjekt 31 in sechs Freiheitsgraden (6DOF). Aus den Mustern ist zudem die relative Position des Anlagepunkts des Referenzobjektes und damit des Oberflächenpunktes 52 ableitbar, sodass mit nur einer Messung eine räumliche Beziehung zwischen den beiden Eckpunkten 10, 52 ermittelbar ist.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

**Patentansprüche**

1. Verfahren (100) zum Erfassen einer relativen Position mindestens eines ersten Raumpunktes (10) mittels eines handhaltbaren Entfernungsmessgerätes (1), mit

    - einem Positionieren (110) eines bekannten Referenzobjektes (30, 31), das bekannte, optisch erfassbare Merkmale (39) aufweist, die in einem für einen Rückwärtseinschnitt gestalteten Muster angeordnet sind;
    - mindestens einem ersten Messvorgang (120), aufweisend

        - ein Messen (123) einer ersten Entfernung (13) zu dem ersten Raumpunkt (10), und
        - ein Aufnehmen (125) eines ersten Referenzbildes zeitlich verknüpft, insbesondere gleichzeitig, mit dem Messen der ersten Entfernung (13), wobei das Referenzobjekt (30, 31) in dem ersten Referenzbild zumindest teilweise abgebildet ist; und

    - einem Ermitteln der Position und Orientierung des Entfernungsmessgerätes (1) relativ zum Referenzobjekt (30, 31), aufweisend

        - ein Erkennen des Referenzobjektes (30, 31);
        - ein Abrufen gespeicherter Informationen über die bekannten Merkmale (39) des erkannten Referenzobjektes (30, 31), und
        - ein Erkennen von Positionen (49) bekannter Merkmale (39) des Referenzobjektes (30, 31) in dem ersten Referenzbild.

2. Verfahren (100) nach Anspruch 1, **gekennzeichnet durch** mindestens einen ersten und einen zweiten Messvorgang (120, 130), und **dadurch, dass** das Ermitteln der Position und Orientierung des Entfernungsmessgerätes (1) relativ zum Referenzobjekt (30, 31) ein Ermitteln (140) einer Lageveränderung des Entfernungsmessgerätes (1) zwischen dem ersten Messvorgang (120) und dem zweiten Messvorgang (130) umfasst, wobei der zweite Messvorgang (130) aufweist

    - ein Messen (133) einer zweiten Entfernung (14) zu dem zweiten Raumpunkt (11), und
    - ein Aufnehmen (135) eines zweiten Referenzbildes zeitlich verknüpft, insbesondere gleichzeitig, mit dem Messen der zweiten Entfernung (14), wobei das Referenzobjekt (30, 31) in dem zweiten Referenzbild abgebildet ist;

    und wobei das Ermitteln (140) der Lageveränderung aufweist

        - ein Erkennen des Referenzobjektes (30, 31);
        - ein Abrufen gespeicherter Informationen über die bekannten Merkmale (39) des erkannten Referenzobjektes (30, 31), und
        - ein Erkennen von Positionen (49) bekannter Merkmale (39) des Referenzobjektes (30, 31) in dem ersten Referenzbild und in dem zweiten Referenzbild.

3. Verfahren nach Anspruch 2, **dadurch gekennzeichnet, dass** das erste und das zweite Referenzbild mit einem Bildsensor (4), insbesondere einer Digitalkamera, des Entfernungsmessgerätes (1) aufgenommen werden, und das Ermitteln (140) der Lageveränderung ein Erfassen einer ersten räumlichen Lage und einer zweiten räumlichen Lage des Entfernungsmessgerätes (1) beinhaltet, insbesondere in einem lokalen dreidimensionalen Koordinatensystem, insbesondere wobei

        - in dem ersten und dem zweiten Referenzbild die bekannten Merkmale (39) auf einer Bildebene (41) des Bildsensors (4) abgebildet werden,
        - das Erfassen der ersten räumlichen Lage basierend auf den Positionen (49) der bekannten Merkmale des ersten Referenzbildes auf der Bildebene (41) erfolgt, und
        - das Erfassen der zweiten räumlichen Lage basierend auf den Positionen (49) der bekannten Merkmale des zweiten Referenzbildes auf der Bildebene (41) erfolgt.

4. Verfahren (100) nach einem der vorangehenden Ansprüche, **dadurch gekennzeichnet, dass** der erste Messvorgang (120) ein Ausrichten (121) des Entfernungsmessgerätes (1) auf einen ersten Raumpunkt (10) in einer ersten Emissionsrichtung (9) aufweist, und das Messen (123) der ersten Entfernung (13) zu dem ersten Raumpunkt (10) in der ersten Emissionsrichtung (9) erfolgt, insbesondere wobei ein zweiter Messvorgang (130) ein Ausrichten (131) des Entfernungsmessgerätes (1) auf einen zweiten Raumpunkt (11) aufweist, und ein Messen (133) einer zweiten Entfernung (14) zu dem zweiten Raumpunkt (11) in der zweiten Emissionsrichtung (9') erfolgt.

**5.** Verfahren nach einem der vorangehenden Ansprüche,
**dadurch gekennzeichnet, dass**

- die bekannten Merkmale (39) Muster aufweisen, die als QR-Codes, Aztec-Codes oder ArUco-Codes ausgestaltet sind und/oder auf einer zweidimensionalen Oberfläche eines flachen Referenzobjekts (30) angeordnet sind; oder
- die bekannten Merkmale (39) als eine Vielzahl verschieden geformter und/oder gemusterter Oberflächen eines dreidimensionalen Referenzobjektes (31) angeordnet sind, insbesondere wobei

- das dreidimensionale Referenzobjekt (31) im wesentlichen würfelförmig, tetraedisch, tetrapodisch oder pyramidenförmig ist, und/oder eine Vielzahl im wesentlichen kugelförmiger Referenzkörper (32a-e) aufweist; und/oder
- das dreidimensionale Referenzobjektes (31) an der Richtung der Schwerkraft (G) ausgerichtet wird, insbesondere durch ein freischwingendes Aufhängen des Referenzobjektes (31) an einem Gestell (33), insbesondere wobei das Gestell (33) in dem Raum befestigt wird, insbesondere an einer Oberfläche (2) des Raums, und insbesondere mittels einer Klebefläche, eines Saugnapfes, eines Magneten und/oder eines Schraubgewindes des Gestells (33).

**6.** Verfahren nach einem der Ansprüche 1 bis 5,
**gekennzeichnet durch**

- ein Befestigen des Referenzobjektes (30, 31) in dem Raum, insbesondere an einer Oberfläche (2) des Raums, und insbesondere mittels einer Klebefläche, eines Saugnapfes, eines Magneten und/oder eines Schraubgewindes des Referenzobjektes (30, 31); und/oder
- ein Positionieren des Referenzobjektes (30, 31) in bekannter räumlicher Beziehung zu einem Raumpunkt (52), insbesondere wobei das Referenzobjekt (30, 31) einen gekennzeichneten Anlagepunkt zum Anlegen an diesen Raumpunkt (52) aufweist, und ein Ermitteln der Position und Orientierung des Entfernungsmessgerätes (1) relativ zu dem Raumpunkt.

**7.** Verfahren nach einem der vorangehenden Ansprüche,
**dadurch gekennzeichnet, dass**
Merkmaldaten, aufweisend Informationen über bekannte Merkmale (39) mindestens eines bekannten Referenzobjektes (30, 31), insbesondere einer Vielzahl von Referenzobjekten (30, 31), in einer Speichereinheit des Entfernungsmessgerätes (1) gespeichert und zum Erkennen des Referenzobjektes (30, 31) bereitgestellt werden, insbesondere wobei

- die Merkmaldaten einem externen Gerät bereitgestellt werden, insbesondere einem Drucker oder 3D-Drucker, und
- durch das externe Gerät ein Referenzobjekt (30, 31) hergestellt wird, insbesondere eines flachen Referenzobjektes (30) durch Ausdrucken eines Musters auf Folie oder Papier oder eines dreidimensionalen Referenzobjektes (31) durch Material aufbauende oder abtragende Fertigungsverfahren.

**8.** Handhaltbares Entfernungsmessgerät (1) zum Ermitteln relativer Koordinaten von Raumpunkten (10, 11), mit

- einer Entfernungsmesseinheit, insbesondere einem Laserentfernungsmesser (20), zum Messen von Entfernungen (13, 14) zu Raumpunkten (10, 11) entlang einer Emissionsrichtung (9) in einem Raum,
- einer Auswertekomponente (25), die ausgestaltet ist zur Ableitung und Bereitstellung der gemessenen Entfernungen (13, 14), und
- einer Lagebestimmungseinheit zum Ermitteln einer relativen räumlichen Lage des Entfernungsmessgerätes (1),

**dadurch gekennzeichnet, dass**

- das Entfernungsmessgerät (1) eine Speichereinheit zum Speichern von Merkmaldaten und zum Bereitstellen der Merkmaldaten an die Lagebestimmungseinheit aufweist, wobei die Merkmaldaten Informationen über bekannte, optisch erfassbare Merkmale (39) eines oder mehrerer bekannter Referenzobjekte (30, 31) umfassen, und
- die Lagebestimmungseinheit mindestens einen Bildsensor (4) aufweist, der dazu ausgestaltet ist, Referenzbilder zeitlich verknüpft, insbesondere gleichzeitig, mit einem Messen einer Entfernung (13, 14) durch die Entfernungsmesseinheit aufzunehmen, und eine Bildauswertekomponente (27), die dazu ausgestaltet ist,

- ein in den von dem mindestens einen Bildsensor (4) aufgenommenen Referenzbildern abgebildetes bekanntes Referenzobjekt (30, 31) basierend auf den bereitgestellten Merkmaldaten zu erkennen, und
- basierend auf der Verteilung der Merkmale (39) in mindestens einem Referenzbild eine Lage des Entfernungsmessgerätes (1) zu ermitteln.

9. Entfernungsmessgerät (1) nach Anspruch 8, **dadurch gekennzeichnet, dass**

- die Bildauswertekomponente (27) dazu ausgestaltet ist, basierend auf der Verteilung der Merkmale (39) in mindestens zwei Referenzbildern eine Lageveränderung des Entfernungsmessgerätes (1) zu ermitteln, und
- die Auswertekomponente (25) dazu ausgestaltet ist, die ermittelte Lageveränderung mit mindestens zwei gemessenen Entfernungen (13, 14) zu verknüpfen,

insbesondere wobei die Auswertekomponente (25) ausgestaltet ist

- zur Ableitung und Bereitstellung der ermittelten Lageveränderung,
- zur Berechnung und Bereitstellung einer Distanz (15), insbesondere einer Schrägdistanz und/oder eines Höhenunterschiedes, zwischen zwei vermessenen Raumpunkten (10, 11), und/oder
- zur Berechnung und Bereitstellung von Positionen in einem dreidimensionalen lokalen Koordinatensystem.

10. Handhaltbares Entfernungsmessgerät (1) mit

- einer Entfernungsmesseinheit, insbesondere einem Laserentfernungsmesser (20), zum Messen von Entfernungen (13, 14) zu Raumpunkten (10, 11) entlang einer Emissionsrichtung (9) in einem Raum,
- einer Auswertekomponente (25), die ausgestaltet ist zur Ableitung und Bereitstellung der gemessenen Entfernungen (13, 14),
- einem Anhaltepunkt (50) zum Anhalten des Entfernungsmessgerätes (1) an einen Oberflächenpunkt (51) auf einer Oberfläche des Raumes, und
- einer Lagebestimmungseinheit zum Ermitteln einer räumlichen Lage des Entfernungsmessgerätes (1),

**dadurch gekennzeichnet, dass**

- das Entfernungsmessgerät (1) eine Speichereinheit zum Speichern von Merkmaldaten und zum Bereitstellen der Merkmaldaten an die Lagebestimmungseinheit aufweist, wobei die Merkmaldaten Informationen über bekannte, optisch erfassbare Merkmale (39) eines oder mehrerer bekannter Referenzobjekte (30, 31) umfassen, und
- die Lagebestimmungseinheit mindestens einen Bildsensor (4) aufweist, der dazu ausgestaltet ist, mindestens ein Referenzbild zeitlich verknüpft, insbesondere gleichzeitig, mit einem Anhalten des Entfernungsmessgerätes (1) an einen Oberflächenpunkt (51) aufzunehmen, und eine Bildauswertekomponente (27), die dazu ausgestaltet ist,

- in dem mindestens einen Referenzbild Merkmale (39) zu erkennen, und
- basierend auf der Verteilung der Merkmale (39) in mindestens einem Referenzbild eine relative Position des Oberflächenpunktes (51) zu ermitteln.

11. Entfernungsmessgerät (1) nach einem der Ansprüche 8 bis 10, **dadurch gekennzeichnet, dass**

- der Bildsensor (4) und die Entfernungsmesseinheit auf dem Entfernungsmessgerät (1) derart angeordnet sind, dass die Emissionsrichtung (9) und eine Aufnahmerichtung des Bildsensors (4) im wesentlichen parallel sind;
- der Bildsensor (4) und die Entfernungsmesseinheit auf dem Entfernungsmessgerät (1) derart angeordnet sind, dass die Emissionsrichtung (9) der Entfernungsmesseinheit ausserhalb eines Erfassungsbereiches (40) des Bildsensors (4) liegt, insbesondere derart angeordnet sind, dass die Emissionsrichtung (9) und eine Aufnahmerichtung des Bildsensors (4) im wesentlichen orthogonal sind, im Speziellen in einem Winkel von 75° bis 100° zueinander angeordnet sind; oder
- der Bildsensor (4) und die Entfernungsmesseinheit auf dem Entfernungsmessgerät (1) derart angeordnet sind, dass die Emissionsrichtung (9) der Entfernungsmesseinheit innerhalb eines Erfassungsbereiches (40) des Bildsensors (4) liegt, und Umlenkmittel, die insbesondere mindestens einen Spiegel aufweisen, vorgesehen sind, die dazu ausgestaltet sind, eine Aufnahmerichtung des Bildsensors (4) umzulenken, insbesondere derart, dass die Emissionsrichtung (9) und eine Aufnahmerichtung des Bildsensors (4) im wesentlichen orthogonal sind, im Speziellen in einem Winkel von 75° bis 100° zueinander angeordnet sind.

12. Entfernungsmessgerät (1) nach einem der Ansprüche 8 bis 11, **gekennzeichnet durch**

- eine Anzeigeeinheit (23) zum Anzeigen gemessener und berechneter Entfernungen (13, 14, 15) und/oder von Koordinaten von Raumpunkten (10, 11), und

- Eingabemittel (24) zum Anwählen von Funktionen des Entfernungsmessgerätes (1),

insbesondere wobei die Anzeigeeinheit (23) und die Eingabemittel (24) auf einer ersten Seite, insbesondere Oberseite, des Entfernungsmessgerätes (1) angeordnet sind, und der Bildsensor (4) auf einer der ersten Seite gegenüberliegenden zweiten Seite, insbesondere Unterseite, des Entfernungsmessgerätes (1) angeordnet ist,

insbesondere wobei das Entfernungsmessgerät (1) zusätzlich eine Übersichtskamera zur Aufnahme von Bildern in Richtung der Emissionsrichtung (9) aufweist, und die Anzeigeeinheit (23) zusätzlich zum Anzeigen mittels der Übersichtskamera aufgenommener Bilder ausgestaltet ist.

13. Entfernungsmessgerät (1) nach einem der Ansprüche 8 bis 12,
   **dadurch gekennzeichnet, dass**

   - das Entfernungsmessgerät (1) eine Speichereinheit zum Speichern von Merkmaldaten und zum Bereitstellen der Merkmaldaten an die Lagebestimmungseinheit aufweist, wobei die Merkmaldaten Informationen über bekannte, optisch erfassbare Merkmale (39) eines oder mehrerer bekannter Referenzobjekte (30, 31) umfassen,
   - die Bildauswertekomponente (27) dazu ausgestaltet ist, in dem mindestens einen Referenzbild ein abgebildetes bekanntes Referenzobjekt (30, 31) basierend auf den bereitgestellten Merkmaldaten zu erkennen, und insbesondere dazu ausgestaltet ist, basierend auf der Verteilung der Merkmale (39) in dem mindestens einem Referenzbild eine Lage des Entfernungsmessgerätes (1) zu ermitteln.

14. System, aufweisend ein handhaltbares Entfernungsmessgerät (1) nach einem der Ansprüche 8 bis 13 und ein Referenzobjekt (30, 31), wobei

   - das Referenzobjekt (30, 31) bekannte, durch den Bildsensor (4) erfassbare Merkmale (39) aufweist, die in einem für einen Rückwärtseinschnitt optimierten Muster angeordnet sind, und
   - die bekannten Merkmale (39) des Referenzobjektes (30, 31) in einer Speichereinheit des Entfernungsmessgerätes (1) bereitgestellt werden,

   insbesondere wobei das Entfernungsmessgerät (1) und das Referenzobjekt (30, 31) derart ausgestaltet sind, dass sie zu einer für Transport und Lagerung geeigneten Einheit zusammenfügbar sind, insbesondere wobei

   - das Entfernungsmessgerät (1) eine Aufnahme für das Referenzobjekt (30, 31) aufweist, oder
   - das Referenzobjekt (30, 31) als eine Hülle des Entfernungsmessgerätes (1) gestaltet ist.

15. Computerprogrammprodukt mit Programmcode, der auf einem maschinenlesbaren Träger gespeichert ist, zur Ausführung der folgenden Schritte eines Verfahrens nach einem der Ansprüche 1 bis 7, insbesondere wenn das Programm auf einer als Auswertekomponente (25) des Entfernungsmessgeräts (1) nach einem der Ansprüche 8 bis 13 ausgebildeten elektronischen Datenverarbeitungseinheit ausgeführt wird:

   - Messen (123) der ersten Entfernung (13),
   - Aufnehmen (125) des ersten Referenzbildes im wesentlichen gleichzeitig mit dem Messen der ersten Entfernung (13),
   - Erkennen des Referenzobjektes (30, 31);
   - Abrufen gespeicherter Informationen über die bekannten Merkmale (39) des erkannten Referenzobjektes (30, 31), und
   - Erkennen von Positionen (49) bekannter Merkmale (39) des Referenzobjektes (30, 31) in dem ersten Referenzbild.

Fig. 1a

Fig. 1b

*Fig. 2*

*Fig. 3*

Fig. 4

Fig. 5a

Fig. 5b

Fig. 6

Fig. 7a

Fig. 7b

Fig. 8a

Fig. 8b

Fig. 9a

Fig. 9b

**100**

**110** Positionieren des Referenzobjektes

**120**

**121** Anzielen eines ersten Punktes

**123** Messen der Entfernung zu dem ersten Punkt

**125** Aufnahme eines ersten Referenzbildes

**127** Ableiten einer ersten relativen Lage

**130**

**131** Anzielen eines zweiten Punktes

**133** Messen der Entfernung zu dem zweiten Punkt

**135** Aufnahme eines zweiten Referenzbildes

**137** Ableiten einer zweiten relativen Lage

**150** Ermitteln der Lageveränderung

**160** Berechnen der Entfernung zwischen beiden Punkten

**170** Ausgabe des Ergebnisses an den Benutzer

*Fig. 10*

**100'** →

**110**
Positionieren des
Referenzobjektes

**120'**

**123** Messen
der Entfernung zu
dem ersten Punkt

**121**
Anzielen eines
ersten Punktes

**125** Aufnahme
eines ersten
Referenzbildes

**130'**

**129**
Bestimmen einer
Position im Referenzkoordinatensystem

**140**
Abspeichern der
Position im Referenzkoordinatensystem

**160**
Berechnen der
Entfernung zwischen
beiden Punkten

**170**
Ausgabe
des Ergebnisses
an den Benutzer

*Fig. 11*

EP 3 182 065 A1

Fig. 12a

Fig. 12b

Fig. 12c

Fig. 12d

Fig. 12e

1

7

20

4

45

*Fig. 13a*

45

4

4

4

*Fig. 13b*

1

7

20

4

46

*Fig. 13c*

46

4

4

4

*Fig. 13d*

*Fig. 14*

*Fig. 15*

*Fig. 16*

**Europäisches Patentamt**
**European Patent Office**
**Office européen des brevets**

# EUROPÄISCHER RECHERCHENBERICHT

**Nummer der Anmeldung**

EP 15 19 9932

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2008 054453 A1 (BOSCH GMBH ROBERT [DE]) 17. Juni 2010 (2010-06-17) * Absätze [0034] - [0039]; Abbildung 3 * ----- | 1-15 | INV. G01C15/00 G01S17/42 |
| A | EP 2 918 972 A2 (LEICA GEOSYSTEMS AG [CH]) 16. September 2015 (2015-09-16) * Abbildung 1 * ----- | 11 | |

**RECHERCHIERTE SACHGEBIETE (IPC)**

G01C
G01S

Der vorliegende Recherchenbericht wurde für alle Patentansprüche erstellt

| Recherchenort | Abschlußdatum der Recherche | Prüfer |
|---|---|---|
| Den Haag | 14. Juni 2016 | Asthalter, Tanja |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

..................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 9932

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2016

| Im Recherchenbericht angeführtes Patentdokument | Datum der Veröffentlichung | Mitglied(er) der Patentfamilie | Datum der Veröffentlichung |
|---|---|---|---|
| DE 102008054453 A1 | 17-06-2010 | CN 102246002 A<br>DE 102008054453 A1<br>EP 2376868 A1<br>WO 2010066698 A1 | 16-11-2011<br>17-06-2010<br>19-10-2011<br>17-06-2010 |
| EP 2918972 A2 | 16-09-2015 | CN 104913763 A<br>EP 2918972 A2<br>US 2015309174 A1 | 16-09-2015<br>16-09-2015<br>29-10-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0738899 A
- EP 0701702 A
- EP 2698602 A1
- EP 1664674 B1
- EP 2669707 A1
- WO 2015073548 A2
- WO 0250564 A
- EP 2698600 A1